(19) Europäisches Patentamt
European Patent Office
Office européen des brevets

(11) EP 2 691 199 B1

(12) EUROPEAN PATENT SPECIFICATION

(45) Date of publication and mention of the grant of the patent:
**30.11.2016 Bulletin 2016/48**

(21) Application number: **12765220.4**

(22) Date of filing: **30.03.2012**

(51) Int Cl.:
***C08J 5/24*** *(2006.01)* ***B23B 5/04*** *(2006.01)*
***B29C 70/02*** *(2006.01)* *C08L 63/00* *(2006.01)*

(86) International application number:
**PCT/US2012/031672**

(87) International publication number:
**WO 2012/135754 (04.10.2012 Gazette 2012/40)**

# (54) PREPREG, FIBER REINFORCED COMPOSITE MATERIAL, AND MANUFACTURING METHOD FOR FIBER REINFORCED COMPOSITE MATERIAL

PREPREG, FASERVERSTÄRKTES VERBUNDMATERIAL UND HERSTELLUNGSVERFAHREN FÜR DAS FASERVERSTÄRKTE VERBUNDMATERIAL

PRÉIMPRÉGNÉ, MATÉRIAU COMPOSITE RENFORCÉ PAR DES FIBRES, ET PROCÉDÉ DE FABRICATION POUR LE MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2011 US 201161469529 P**
**13.01.2012 US 201261586232 P**

(43) Date of publication of application:
**05.02.2014 Bulletin 2014/06**

(73) Proprietor: **Toray Industries, Inc.**
**Tokyo 103-8666 (JP)**

(72) Inventors:
- **ARAI, Nobuyuki**
  **Lyo-gun, Ehime, 791-3193 (JP)**
- **HUGHES, Jonathan, C.**
  **Auburn, Washington 98092 (US)**
- **SATTERWHITE, Jeffrey, A.**
  **Puyallup, Washington 98375 (US)**
- **ARAI, Atsuhito**
  **Lyo-gun, Ehime, 791-3193 (JP)**
- **HARO, Alfred, P.**
  **Spanaway, Washington 98387 (US)**
- **YOSHIOKA, Kenichi**
  **Puyallup WA 98374 (US)**

(74) Representative: **Webster, Jeremy Mark et al**
**Mewburn Ellis LLP**
**City Tower**
**40 Basinghall Street**
**London EC2V 5DE (GB)**

(56) References cited:
**EP-A1- 1 541 312**
**WO-A1-2007/041782**
**US-A- 4 590 122**
**US-A1- 2007 182 071**
**US-A1- 2010 098 927**
**US-A1- 2010 222 461**
**US-A1- 2010 239 755**
**US-A1- 2010 247 882**

- **DATABASE WPI Week 199439 Thomson Scientific, London, GB; AN 1994-313793 XP002733486, & JP H06 240022 A (DAINIPPON INK & CHEM INC) 30 August 1994 (1994-08-30)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 691 199 B1

## Description

### Related Applications

This application claims benefit from U.S. Provisional Application No. 61/469,529, filed March 30, 2011, and U.S. Provisional Application No. 61/586,232, filed January 13, 2012, both of these applications are incorporated herein in their entirety by reference.

### Field of the Invention

The present invention relates to a prepreg that can provide a high level of both excellent processability and excellent impact resistance and that can be molded using only a vacuum pump and oven, without using an autoclave, and also relates to a fiber reinforced composite material using this prepreg and to a manufacturing method for this fiber reinforced composite material.

### Background of the Invention

Fiber reinforced composite materials have excellent mechanical properties such as strength and rigidity while being lightweight, and therefore are widely used as aircraft members, spacecraft members, automobile members, railway car members, ship members, sports apparatus members, and computer members such as housings for laptops, and the demand is increasing year by year. Of these fields, aircraft members and spacecraft members require particularly excellent mechanical properties and heat resistance, so carbon fibers are most commonly used as the reinforcing fiber. Herein, examples of spacecraft members include members that are used in man-made satellites, rockets, and space shuttles and the like.

Furthermore, among thermosetting resins, combinations of epoxy resin and polyamine which have excellent heat resistance, modulus of elasticity, and chemical resistance as well as minimal cure shrinkage are most commonly used as matrix resins. The mainstream method of manufacturing these fiber reinforced composite materials is thermocompression molding using an autoclave or the like, but there are problems with high molding costs, large molding equipment, and restrictions to the molding size because of equipment, and the like (for example, refer to patent document 1).

In consideration of the foregoing problems, recently there are reports that a low void fiber reinforced composite material can be produced by out of autoclave molding using only a vacuum pump and oven without the use of pressurizing equipment such as an autoclave, by using a partially impregnated prepreg where the reinforcing fibers are partially impregnated with the matrix resin so that air that becomes trapped during layup and volatile components from the prepreg are released out of the prepreg using the unimpregnated portion of the reinforcing fibers inside the prepreg as an air path. (For example, refer to patent document 2). However, although the aforementioned problems can be promptly resolved with this technology, there remains problems with impact resistance expressed by the resistance towards drop impact, which is a fundamental issue with fiber reinforced composite materials. Therefore, there is a need to use technology that provides a tough fiber reinforced composite material using a prepreg with a resin layer made by dispersing particles made of a thermoplastic resin such as nylon or the like on a surface region of the prepreg (refer to patent document 3). On the other hand, adding particles made of a thermoplastic resin to a thermosetting resin will cause an extreme reduction in the flow of the matrix resin in the prepreg. However, during high-pressure molding such as with an autoclave, the air that is trapped during layup and the volatile components from the prepreg are released out of the prepreg using the matrix resin flow and the process of integrating the prepreg. In other words, the consolidation process is completed during curing, so the fiber reinforced composite material obtained does not have a particularly big problem with achieving low voids. However, with low-pressure molding such as out of autoclave molding using only a vacuum pump and an oven, the aforementioned partially impregnated prepreg is generally used, but with a partially impregnated prepreg with a resin layer where particles made from a thermoplastic resin are dispersed in a surface region of the prepreg in order to increase impact resistance, the consolidation process cannot be completed during curing because of the extremely low matrix resin flow rate in the prepreg and the large volume of unimpregnated fiber. Therefore, when confronting the major problem of a large number of voids occurring in the fiber reinforced composite material obtained, a fiber reinforced composite material that also has excellent impact resistance has not been obtainable to date using out of autoclave molding.

WO 2007/041782 A1 describes a fibre-reinforced fabric or preform including reinforcing fibres and semicrystalline thermoplastic polymer binder for subsequent infusion with uncured thermosetting polymer.

US 2010/0098927 A1 describes systems and methods for the reduction of volatile component content from shaped prepregs and prepreg layups and the layups and composites formed therefrom.

US 2010/0239755 A1 describes a prepreg that can be cured to form composite parts that have high levels of damage tolerance. The matrix resin includes a thermoplastic particle component that is a blend of particles that have a melting point above the curing temperature and particles that have a melting point at or below the curing temperature.

US 2010/0247882 A1 describes a composite material comprising a first prepreg material with improved resistance to microbuckling and kinkband formation; and a second prepreg material with improved resistance to delamination.

US 2010/0222461 A1 describes polymer compositions capable of a high degree of curing at relatively low temperatures, and prepregs formed therefrom.

US 2007/0182071 describes an RTM molding method and device for molding a relatively large fibre-reinforced plastic.

US 4,590,122 A describes a woven, drapable, formable graphite fabric.

[Patent Document 1] JP 2004-050574A
[Patent Document 2] US No. 6,391,436B
[Patent Document 3] J P 10-231372A

**Brief Description of the Drawings**

FIG. 1 shows an example of a cross-section view of a prepreg of an embodiment.
FIG. 2 shows a schematic of the consolidation process for the prepreg of an embodiment.

**Summary of the Invention**

As a result of diligent research into the mechanism of generating voids in fiber reinforced composite materials made of thermosetting resin in order to resolve the aforementioned problems at once, the present inventors have discovered that a prepreg can, at a high level, provide both excellent impact resistance and matrix resin flow properties suitable for out of autoclave molding, if the prepreg is partially impregnated to a certain weight fraction by a thermosetting resin composition. Furthermore, the present inventors simultaneously discovered a fiber reinforced composite material that uses this prepreg and a manufacturing method thereof.

The invention relates to a prepreg having a structure comprising a first layer and a second layer, wherein the prepreg comprises component (A) comprising a reinforcing fiber, component (B) comprising a thermosetting resin, and component (C) comprising a particle or a fiber of a thermoplastic resin, wherein the component (C) is substantially locally distributed in the first layer and the prepreg is a partially impregnated prepreg in which a portion of the reinforcing fiber is impregnated and the remaining reinforcing fiber is impregnated with the thermosetting resin composition containing (B) and (C), and the impregnation ratio of the thermosetting resin composition in the prepreg is from 10% to 90%, wherein the thermosetting resin has a viscosity at 50°C of between 100 and 2,000 Pa.s and a minimum viscosity of between 0.1 and 15 Pa.s, the weight fraction of the thermosetting resin composition comprising components (B) and (C) is from 33 to 42%, the amount of matrix resin flowing out of the prepreg at a degree of vacuum of 3 kPa at 120 °C is between 4.0 and 7.0%, and the gelling time is 100 minutes or longer.

Furthermore, fiber reinforced composite materials made by thermally curing the prepreg in the present invention are also included.

Furthermore, the manufacturing method for a fiber reinforced composite material of the present invention is such that the prepreg is laminated, degassing is performed at a temperature between 20 and 50 °C and a degree of vacuum of 11 kPa or less; and molding is performed by increasing the temperature to a curing temperature while maintaining the degree of vacuum at 11 kPa or less and / or wherein during molding the prepreg is maintained at a temperature between 60 and 160 °C, and then after a degree of curing of the thermosetting resin has reached 20% or higher, and/or the change in the thickness of the prepreg is 9% or higher, a step curing method is performed up to the final curing temperature.

**Description of the Preferred Embodiment**

An embodiment relates to a prepreg having a structure comprising a first layer and a second layer, wherein the prepreg comprises component (A) comprising a reinforcing fiber, component (B) comprising a thermosetting resin, and component (C) comprising a particle or a fiber of a thermoplastic resin, the component (C) is substantially locally distributed in the first layer and the prepreg is a partially impregnated prepreg,

Herein, prepreg refers to a molding intermediate substrate where reinforcing fibers are impregnated with a matrix resin, and in the present invention, a thermosetting resin composition containing (B) thermosetting resin and (C) particles or fiber of thermoplastic resin is used as the matrix resin. With this prepreg, the thermosetting resin is in an uncured condition, and a fiber reinforced composite material can be obtained by laying up the prepreg and curing. Naturally, a fiber reinforced composite material can be obtained by curing a single layer of prepreg. With a fiber reinforced composite material made by laying up a plurality of prepreg layers and curing, the surface part of the prepreg becomes an interlayer formed layer of the fiber reinforced composite material, and the inside of the prepreg becomes a reinforcing fiber layer of the fiber reinforced composite material.

The (A) reinforcing fibers that are used in the present invention can be glass fibers, Kevlar fibers, carbon fibers, graphite fibers, or boron fibers or the like. Of these, carbon fibers are preferable from the perspective of specific strength and specific modulus. Examples of the shape and orientation of the reinforcing fibers include long fibers aligned in one direction, bidirectional fabrics, multiaxial fabrics, nonwoven materials, mats, knits, braids, and the like. These can be freely selected based on the application and area of use.

The (B) thermosetting resin that is used in the present invention is not particularly restricted, so long as the resin undergoes a cross-linking reaction due to heat and forms at least a partial three-dimensional cross linked structure. Examples of these thermosetting resins include unsaturated polyester resin, vinyl ester resin, epoxy resin, benzoxazine resin, phenol resin, urea resin, melamine resin, and polyimide resin and the like. Variance of these resins and resins that are blends of two or more types can also be used. Furthermore, these thermosetting resins can be resins that are self curing under heat, or can be blended with a curing agent or curing accelerator or the like.

Of these thermosetting resins, epoxy resins are preferably used because of having an excellent balance between heat resistance, mechanical properties, and adhesion to carbon fibers. In particular, epoxy resins with amines, phenols, and compounds with a carbon-carbon double bond as a precursor are preferably used. Specifically, aminophenol type epoxy resins, glycidyl aniline type epoxy resins, and tetraglycidyl amine type epoxy resins, which have an amine as a precursor are preferably used. Examples of glycidyl amine type epoxy resins include variants such as tetraglycidyl diaminodiphenyl, triglycidyl-p-aminophenol and triglycidyl aminocreosol. The tetraglycidyl amine type epoxy resin having an average epoxide equivalent weight (EEW) in the range of 100 to 115 that is highly-pure tetraglycidyl amine type epoxy resin, and the aminophenol type epoxy resin having an average EEW in the range of 90 to 104 that is highly-pure aminophenol type epoxy resin, are preferably used to prevent volatile components which may grow up void in the fiber reinforced composite material obtained. Tetraglycidyl diaminodiphenyl methane has excellent heat resistance, and is preferably used as a resin for composite materials for aircraft structural members.

Furthermore, a glycidyl ether type epoxy resin that uses phenol as a precursor is also preferably used as a thermosetting resin. Examples of these epoxy resins include bisphenol A type epoxy resins, bisphenol F type epoxy resins, bisphenol S type epoxy resins, phenol novolac type epoxy resins, creosol novolac type epoxy resins, and resorcinol type epoxy resins. The bisphenol A type epoxy resin having an average EEW in the range of 170 to 180 that is highly-pure bisphenol A type epoxy resin, and the bisphenol F type epoxy resin having an average EEW in the range of 150 to 165 that is highly-pure bisphenol F type epoxy resin, are preferably used to prevent volatile components which may grow up void in the fiber reinforced composite material obtained.

Liquid bisphenol A type epoxy resins, bisphenol F type epoxy resins, and resorcinol type epoxy resins have a low viscosity, and therefore are preferably used in combination with other epoxy resins.

Furthermore, bisphenol A type epoxy resins that are solid at room temperature (approximately 25 °C) provide a structure with a low cross linking density in the cured resin as compared to a bisphenol A type epoxy resin that is liquid at room temperature (approximately 25 °C), and therefore the cured resin will have lower heat resistance, but will have higher toughness, so glycidylamine type epoxy resins, liquid bisphenol A type epoxy resins, and bisphenol F type epoxy resins are preferably used in combination.

Epoxy resins with a naphthalene backbone provide a cured resin with low water absorption and high heat resistance. Furthermore, biphenyl type epoxy resins, dicyclopentadiene type epoxy resins, phenol aralkyl type epoxy resins, and phenyl fluorine type epoxy resins also provide a cured resin with low water absorption and therefore can be preferably used.

Urethane modified epoxy resins and isocyanate modified epoxy resins provide a cured resin with high fracture toughness and elongation, and therefore can be preferably used.

These epoxy resins can be used individually, or can be appropriately blended and used. If a bifunctional , tri-functional or higher functional epoxy resin is added to the resin system can provide both workability and processability as a prepreg and heat resistance under moisture conditioning as a fiber reinforced composite , and this is preferable. In particular, a combination of glycidyl amine and glycidyl ether type epoxies can achieve processability, heat resistance, and water resistance. Furthermore, blending at least one epoxy resin that is liquid at room temperature and at least one epoxy resin that is solid at room temperature is effective for providing both suitable tack properties and draping properties to the prepreg.

Phenol novolac type epoxy resins and creosol novolac type epoxy resins have high heat resistance and low water absorption, and therefore provide a cured resin with high heat and water resistance. By using these phenol novolac type epoxy resins and creosol novolac type epoxy resins, the heat and water resistance can be increased while adjusting the tack properties and drape properties of the prepreg.

The hardener for the epoxy resin can be any compound with an active group that can react with an epoxy group. Compounds with an amino group, acid anhydride group, or azide group are suitable as hardeners. More specific examples of hardeners include dicyandiamide, diaminodiphenyl methane, and various isomers of diamino diphenyl sulfone, amino benzoate esters, various types of acid anhydrides, phenol novolac resins, cresol novolac resins, polyphenol compounds, imidazol derivatives, ,aliphatic amines, tetramethyl guanidine, thiourea adduct amines, methylhexahydrophthalic anhydride, and other carboxylic acid anhydrides, carboxylic acid hydrazides, carboxylic acid amides, polymercaptans, and boron trifluoride ethylamine complexes and other Lewis acid complexes and the like. These hardeners can be used individually or in combination.

By using an aromatic diamine as the hardener, a cured resin with favorable heat resistance can be obtained. In particular, various isomers of diaminodiphenyl sulfone provide a cured resin with favorable heat resistance, and therefore are most suitable. The amount of aromatic diamine hardener that is added is preferably a stoichiometrically equivalent amount, but in some cases, a cured resin with high modulus of elasticity can be obtained by using an equivalent ratio of approximately 0.7 to 0.9.

Furthermore, by using an imidazole or a combination of dicyandiamide and the urea compound such as 3-phenol-1,1-dimethyl urea, 3-(3-chlorophenyl)-1,1-dimethyl urea, 3-(3,4-dichlorophenyl)-1,1-dimethyl urea, 2,4-toluene bisdimethyl urea, and 2,6-toluene bisdimethyl urea as the hardener, high heat resistance and water resistance can be achieved while curing at a relatively low temperature. Hardening with an acid anhydride will provide a cured resin with relatively low water absorption compared to amine compound hardening. In addition, by using a substance that has a potential of forming one of these hardeners, such as a microencapsulated substance, the storage stability of the prepreg can be enhanced, and in particular, the tack properties and drape properties will not easily change even when left at room temperature.

Furthermore, these epoxy resins and hardeners, or preliminarily partially reacted products thereof can also be added to the composition. In some cases, this method is effective for adjusting the viscosity and increasing the storage stability.

A thermoplastic resin is preferably blended and dissolved in the aforementioned (B) thermosetting resin. These thermoplastic resins are generally preferably thermoplastic resins which have a bond selected from carbon-carbon bonds, amide bonds, imide bonds, ester bonds, ether bonds, carbonate bonds, urethane bonds, thioether bonds, sulfone bonds, and carbonyl bonds, but it is also acceptable to have a partially cross-linked structure. Furthermore, the thermoplastic resin may or may not have crystallinity. In particular, at least one type of resin is preferably blended with and dissolved in the thermosetting resin, selected from the group consisting of polyamides, polycarbonates, polyacetals, polyphenylene oxides, polyphenylene sulfides, polyarylates, polyesters, polyamideimides, polyimides, polyetherimides, polyimides with a phenyltrimethylindane structure, polysulfones, polyethersulfones, polyetherketones, polyetheretherketones, polyaramids, polyethernitriles, and polybenzimidazoles.

These thermoplastic resins can be commercial polymers, or so-called oligomers with a lower molecular weight than commercial polymers. The oligomers are preferably oligomers with a functional group that can react with the thermosetting resin either at the terminus or in the molecular chain.

If a blend of a thermosetting resin and a thermoplastic resin is used, the results will be more favorable than if only one of these is used. The brittleness of the thermosetting resin can be compensated for by the toughness of the thermoplastic resin, and the molding difficulty of the thermoplastic resin can be compensated for by the thermosetting resin, and thus a base resin with balance can be achieved. The ratio (weight parts) of thermosetting resin and thermoplastic resin is preferably in a range between 100:2 and 100:50, more preferably in a range between 100:5 and 100:35, from the perspective of balance.

For the present invention, (C) particles or fibers of thermoplastic resin are an essential component, and therefore excellent impact resistance can be achieved. The material of the (C) particles or fibers of thermoplastic resin that is used in the present invention can be similar to the various types of thermoplastic resins previously presented as the thermoplastic resin that is blended and dissolved in the thermosetting resin. Of these, polyamides are most preferable for greatly increasing the impact resistance because of excellent toughness. Of these polyamides, nylon 12, nylon 11, and nylon 6/12 copolymer have particularly favorable adhesion strength to the (B) thermosetting resin. Therefore the interlayer peel strength of the fiber reinforced composite material will be high during falling weight impact, and the effect of enhancing the impact resistance will be high, and this is preferable.

If particles of thermoplastic resin are used as (C), the shape of the thermoplastic resin particles can be spherical, non-spherical, porous, needle shaped, whisker shaped, or flake shaped. However, a spherical shape is preferable because a fiber reinforced composite material that demonstrates high impact resistance can be obtained for the following reasons: the impregnation into the reinforcing fibers will be superior because the flow properties of the thermosetting resin will not be reduced; and the interlayer peeling that occurs due to localized impact during falling weight impact (or localized impact) on the fiber reinforced composite material is further reduced, so if the impacted fiber reinforced composite material is subjected to stress, the weak region with interlayer peeling caused by the localized impact that becomes the starting point for breaking due to concentration of stress will be smaller.

If thermoplastic resin fibers are used as (C), the shape of the thermoplastic resin fibers can be short fibers or long fibers. For the case of short fibers, a method of using fibers in the same manner as particles as shown in JP02-69566A, or a method of processing in a mat is possible. For the case of long fibers, a method of orienting the long fibers horizontally on the surface of the prepreg as shown in JP04-292634A, or a method of randomly orienting the fibers as shown in WO94016003A can be used. Furthermore, the fibers can be processed and used as a sheet type substrate such as a weave as shown in JP02-32843A, or as a nonwoven material or knit as shown in WO94016003A. Furthermore, a method can be used where short fiber chips, chopped strands, milled fibers, and short fibers are spun as thread and then horizontally or randomly oriented to form a weave or knit.

With the prepreg of the present invention, the (C) particles or fibers of thermoplastic resin are locally provided on the surface part of the prepreg. In other words, a layer with an abundance of the aforementioned (C), where the particles or fibers (C) can clearly be confirmed to exist locally when the cross section is observed (hereinafter also referred to as an interlayer molding layer) must be formed on the surface portion of the prepreg. Thereby, if the prepreg is overlaid and the matrix resin is cured to form a fiber reinforced composite material, an interlayer is formed where the aforementioned (C) of the reinforcing fiber layer exists locally between the reinforcing fiber layers. Thereby the toughness between the reinforcing fiber layers will have been increased, and a high degree of impact resistance will be expressed by the fiber reinforced composite material obtained.

On the other hand, an interlayer molded layer with an abundance of the aforementioned (C) will have extremely low weight fraction of (B) thermosetting resin, so the resin flow will be much lower when compared to the aforementioned (B) alone, and therefore there will be a major problem during the consolidation process when out of autoclave molding in particular is used.

The weight fraction of the thermosetting resin composition containing (B) thermosetting resin and (C) particles or fibers of thermoplastic resin in the prepreg of the present invention is between 33 and 42%, and preferably between 35 and 40%. If the weight fraction of thermosetting resin composition is too low, the flow of the matrix resin in the prepreg will be extremely insufficient, and unimpregnated reinforcing fiber could not be impregnated with the matrix resin during curing the prepregs, so the prepreg consolidation process will end prematurely, and many voids will occur in the fiber reinforced composite material obtained. If the fraction of the thermosetting resin composition is too high, the advantage of the fiber reinforced composite material having excellent specific strength and specific modulus cannot be obtained.

The prepreg of the present invention is a partially impregnated prepreg where a portion of the (A) reinforcing fiber is unimpregnated, and the remaining reinforcing fiber is impregnated with a thermosetting resin composition containing (B) thermosetting resin and (C) particles or fibers of thermoplastic resin. The impregnation ratio of thermosetting resin composition in the prepreg is between 10 and 90%, more preferably between 20 and 70%, and even more preferably between 20 and 50%. If the impregnation ratio is too low, peeling will occur between the reinforcing fibers and the thermosetting resin composition, and the tackiness of the prepreg will be too strong, so the workability will be inferior and more time will be required for impregnating the unimpregnated reinforcing fibers with matrix resin during prepreg curing, and therefore more time will be required for consolidation of the prepreg and many voids may occur in the fiber reinforced composite material obtained. If the impregnation ratio is too high, the air path through the unimpregnated layer might be insufficient, many voids might occur in the fiber reinforced composite material obtained, and the flow of the matrix resin in the interlayer molded layer will be extremely low, so air that is trapped during laying up cannot escape out of the prepreg during the curing of the prepreg, the prepreg consolidation process will end prematurely, and many voids might occur in the fiber reinforced composite material obtained. Note, the impregnation ratio of the thermosetting resin composition in the prepreg herein can be calculated by curing the prepreg slowly at a low temperature that no resin flow occurs, observing the cross-section after curing using a microscope, and determining the fraction of the cross-sectional area of the reinforcing fibers impregnated with thermosetting resin composition compared to the total cross-sectional area of all reinforcing fibers.

FIG. 1 shows an example of a cross-section view of a typical prepreg of the present invention. The present invention will be described more specifically using FIG. 1.

The prepreg of the present invention illustrated in FIG. 1 has an interlayer molded layer 5 containing thermosetting resin 2 and thermoplastic resin particles 4 between two reinforcing fiber layers 3 containing reinforcing fiber 1 and thermosetting resin 2. The toughness between the reinforcing fiber layers is enhanced by the formation of the interlayer molded layer 5. Furthermore, the prepreg of the present invention has an unimpregnated layer 6 where the reinforcing fibers 1 are not impregnated with the thermosetting resins 2. The unimpregnated layer 6 acts as an air path during out of autoclave molding and releases the volatile components from the epoxy resin and the air that was trapped during the layup process to the outside of the panel. The unimpregnated layer 6 can be a contiguous reinforcing fiber layer, or can be a non-contiguous reinforcing fiber layer that is impregnated in spots with the thermosetting resin. Furthermore, with a conventional completely impregnated prepreg, the weight fraction of the thermosetting resin 1 included in the interlayer molded layer 5 is low, so the flow of matrix resin in the interlayer molded layer 5 will be extremely low. On the other hand, with the prepreg of the present invention, the weight fraction of the thermosetting resin in the interlayer molded layer 5 is optimized by controlling the impregnation ratio to a high degree, and air that is trapped during layup and volatile components from the prepreg are released out of the prepreg using the flow of the matrix resin while at the same time resin flow to the unimpregnated layer 6 in the prepreg is ensured and thus the matrix resin can quickly impregnate unimpregnated layer 6.

Next, the consolidation process for the prepreg of the present invention is described using FIG. 2. The prepreg of the present invention has an unimpregnated layer 6. With this prepreg, the thermosetting resin 2 impregnates the unimpregnated layer 6 during curing. At the same time, the density of the prepreg is increased while the top and bottom of the prepreg are firmly integrated. In the present invention, this series of processes is defined as the consolidation process. In order to achieve low voids in the fiber reinforced composite material obtained, the aforementioned consolidation process must be completed during curing the prepreg. Furthermore, as one step of the consolidation process, air that is trapped during layup and volatile components from the prepreg must be released out of the prepreg during the consolidation process. With the prepreg of the present invention, the weight fraction of the thermosetting resin in the interlayer molded layer 5 is optimized by controlling the resin impregnation to a high degree, and the flow of the matrix resin during prepreg curing, and particularly the flow of the matrix resin in the interlayer molded layer 5 is maximized, even in low pressure conditions, such as with out of autoclave molding. Furthermore, air that is trapped during layup and volatile components from the prepreg are released out of the prepreg using the flow of the matrix resin while at the same time the unimpregnated layer 6 inside the prepreg can be quickly impregnated with matrix resin, and the prepreg consolidation process can be completed. Furthermore, the fiber reinforced composite material obtained can simultaneously have low voids and high impact resistance. With the present invention, the thickness of the interlayer molded layer 5 is optimized when curing the prepreg of the present invention by optimizing the particle diameter of the thermoplastic particles 4 in the interlayer molded layer 5 in preparation for out of autoclave molding. Therefore, the weight fraction of the thermosetting resin used at that time can be optimized, and a sufficient amount of thermosetting resin 2 can flow into the reinforcing fiber layer 3. Furthermore the thermosetting resin 2 can quickly impregnate the unimpregnated layer 6 in the prepreg. As a result, the consolidation process is completed and low voids can be achieved in the fiber reinforced composite material obtained. Furthermore, the CV value of the thermoplastic resin particles 4 in the interlayer molded layer 5 can be optimized, and thereby the weight fraction of the thermosetting resin used in the interlayer molded layer can be optimized in preparation for out of autoclave molding. As a result, the flow of the matrix resin during prepreg curing, and particularly the flow of the matrix resin in the interlayer molded layer 5 is maximized. Furthermore, air that is trapped during layup and volatile components from the prepreg are released out of the prepreg using the flow of the matrix resin, while at the same time, resin flow into the unimpregnated layer inside the prepreg can be ensured, the matrix resin can quickly impregnate, and the prepreg consolidation process can be completed. In particular, combining optimization of the CV value and/or optimization of the particle diameter of the thermoplastic resin particles 4 while controlling the impregnation of the prepreg can maximize the flow of matrix resin in the prepreg, and therefore this is particularly preferable.

The interlayer molded layer 5 of FIG. 1 preferably exists in a range from at least one side surface of the prepreg to a depth of 20%, more preferably to a depth of 10%, with regards to 100% of the depth of the prepreg. Furthermore, from the perspective of enhancing the convenience when manufacturing the fiber reinforced composite material, the aforementioned interlayer molded layer preferably exists on both the front and back sides of the prepreg.

Preferably, between 90 and 100 % of the total weight of (C) particles or fibers of thermoplastic resin locally exists in the interlayer molded layer. More preferably, between 95 and 100 weight% locally exist in the interlayer molded layer.

The thickness of the interlayer molded layer with regards to the prepreg and the existence fraction of the aforementioned component (C) included in the interlayer molded layer can be evaluated by the following methods.

In order to determine the thickness of the prepreg and of the interlayer molded layer, a plate-like cured prepreg material was fabricated by tightly clamping a plurality of overlaid prepregs between the surfaces of two smooth polytetrafluoroethylene resin plates, and gradually increasing the temperature to the curing temperature over 7 days in order to gel and cure the prepreg.

A photomicrograph was taken of a polished cross section of the cured prepreg. This photomicrograph was used to measure the thickness of the interlayer molded layer. Specifically, the interlayer molded layers 5 between the reinforcing fiber layers 3 were measured in at least 10 arbitrarily selected locations as from the photomicrograph, and then the average value was taken as the thickness of the interlayer molded layer.

The existence ratio of (C) is the % by volume of (C) that is included in the interlayer molded layer, wherein the interlayer molded layer is defined as the area contained by a thickness from the surface of the prepreg to a depth equal to 20% of the total thickness of the prepreg, divided by the percent by volume of (C) in the total area of the prepreg. To determine the existence ratio a plate-like cured prepreg material was fabricated by tightly clamping a single layer of prepreg between the surfaces of two smooth polytetrafluoroethylene plates, and gradually increasing the temperature to the curing temperature over 7 days in order to gel and cure the prepreg. Two lines are drawn parallel to each of the surfaces at a depth from the surfaces that are 20% of the thickness of the cured prepreg. Next, the total area of (C) that exists in the interlayer molded layer and the total area of (C) that exists across the total thickness of the prepreg is determined. The area of (C) for both cases are determined by cutting out the particle or fiber portion of (C) from the cross sectional photomicrograph using specific software such as ImageJ and calculating the percent of pixels from the total amount of pixels in the area of the photomicrograph that contains the cross section of the prepreg. If the judgment is difficult after taking a photomicrograph of the particles dispersed in the resin, a method of staining the particles can also be used.

Furthermore, in the present invention, the weight of the (C) particles or fibers of thermoplastic resin is preferably in a range of 20 weight % or less with regards to the prepreg. If the weight of the aforementioned component (C) exceeds 20 weight % of the prepreg, blending with the (B) thermosetting resin will be difficult, and the tackiness and drape properties of the prepreg might be reduced. In other words, in order to provide impact resistance while maintaining the properties of the thermosetting resin, the weight of the aforementioned component (C) is preferably 20 weight % or less of the prepreg, and more preferably 15 weight % or less. In order to make the handling of the prepreg even more superior, the weight of the aforementioned component (C) is more preferably 10 weight % or less. In order to achieve high impact resistance, the weight of the aforementioned component (C) is preferably 1 weight % or higher, more preferably 2 weight % or higher.

The viscosity at 50°C of the (B) thermosetting resin of the present invention is between 100 and 2000Pa·s, more preferably between 200 and 1200 Pa·s, and particularly preferably between 300 and 800 Pa·s, in order to achieve both prepreg handling properties and to maximize the flow of the matrix resin in the prepreg under low-pressure conditions such as during out of autoclave molding. If the viscosity at 50°C is too low, the resin film required for producing the prepreg cannot be produced, the handling properties of the prepreg will be inferior, and there may be problems with workability because the tack will be too high when laying up the prepreg. Furthermore, when degassing, the air that is trapped during layup can not be released and many voids may form in the fiber reinforced composite material obtained. If the viscosity at 50 °C is too high, the flow of the matrix resin in the prepreg will be low, the consolidation process of the prepreg will terminate prematurely, and many voids might occur in the fiber reinforced composite material obtained. Furthermore, the tackiness of the prepreg will be low and there will be problems with workability in that the prepreg can not be overlaid in the mold, and when a resin film required for fabricating the prepreg is produced, the viscosity will be too high so excessive temperature will be required for film forming, and the storage stability of the prepreg obtained might be lost.

The minimum viscosity of the (B) thermosetting resin of the present invention is between 0.1 and 15 Pa·s, more preferably between 0.3 and 10 Pa·s, and particularly preferable between 0.5 and 6 Pa·s. If the minimum viscosity is too low, the flow of the matrix resin will be too high so resin will be discharged out of the prepreg during prepreg curing. Furthermore, there is a possibility that the desired resin fraction might not be achieved for the fiber reinforced composite material obtained, the flow of the matrix resin in the prepreg will be insufficient, the consolidation process of the prepreg will terminate prematurely, and that many voids will occur in the fiber reinforced composite material obtained. If the minimum viscosity is too high, there is a possibility that the flow of the matrix resin in the prepreg will be low, the consolidation process of the prepreg will terminate prematurely, and many voids will occur in the fiber reinforced composite material obtained. Herein, 50°C and the minimum viscosity are determined by the following methods. Namely, measurements are performed using a dynamic viscoelasticity measuring device (ARES, manufactured by TA Instruments) using parallel plates while simply increasing the temperature at a rate of 2°C/min, with a strain of 100%, frequency of 0.5 Hz, and plate interval of 1 mm, from 50°C to 170°C.

When the particle size distribution is measured by a laser diffraction scattering method and a cumulative curve is determined with the total volume as 100%, the particle diameter of the (C) particles of thermoplastic resin of the present invention where the cumulative curve is 90% is preferably between 5 and 20 μm, more preferably between 5 and 15 μm, and particularly preferably between 7 and 15 μm. With the prepreg of the present invention, optimizing the particle diameter of the (C) particles of thermoplastic resin can optimize the thickness of the interlayer molded layer 5 during curing the prepreg of the present invention, and thereby the weight fraction of the thermosetting resin used in the interlayer molded layer can be optimized. As a result, a sufficient amount of thermosetting resin can flow into the reinforcing fiber layer. Furthermore, the thermosetting resin can quickly impregnate the unimpregnated layer in the prepreg. As a result, the consolidation process is completed and low voids can be achieved in the fiber reinforced composite material obtained. For example, using the aforementioned particles with a particle diameter of 10 μm will cause the interlayer to be thinner when the prepreg of the present invention is cured as compared to using the aforementioned 20 μm particle diameter, and thereby a greater amount of thermosetting resin can quickly flow into the unimpregnated layer inside the prepreg. As a result, the consolidation process of the prepreg is completed and the fiber reinforced composite material obtained can achieve low voids and high impact resistance. If the particle diameter is too small, the particles will permeate between the reinforcing fibers and will not localize in the area between the layers of the prepreg multilayer body, and therefore the toughening effect of the particles cannot be sufficiently achieved, and the impact resistance might be low. If the particle diameter is too large, the thickness of the interlayer molded layer will be thicker than is necessary, and therefore the thermosetting resin supplied to the unimpregnated part in the prepreg will be insufficient, and the flow of matrix resin in the prepreg will be extremely small. Therefore the consolidation process of the prepreg will terminate prematurely, and many voids might occur in the fiber reinforced composite material obtained.

Furthermore, the (C) particles of thermoplastic resin of the present invention preferably have a CV value of 45% or lower when the particle size distribution is measured by the laser diffraction scattering method. A more preferable value is 40% or less, and a value of 35% or less is particularly preferable. With the prepreg of the present invention, optimizing the CV value of the (C) particles of thermoplastic resin can optimize the weight fraction of the thermosetting resin used in the interlayer molded layer during curing the prepreg of the present invention. As a result, the flow of the matrix resin during prepreg curing, and particularly the flow of the matrix resin in the interlayer molded layer is maximized. Furthermore, air that is trapped during layup and volatile components from the prepreg are released out of the prepreg using the flow of the matrix resin, while at the same time, resin flow into the unimpregnated layer inside the prepreg can be ensured, the matrix resin can quickly impregnate the fiber layer of the prepreg, and the prepreg consolidation process can be completed. For example, using particles with a CV value of 30% will cause the weight fraction of thermosetting resin that occupies the interlayer molded layer to be higher when curing the prepreg the present invention, as compared to when particles with a CV value of 45% are used. Furthermore the flow of the matrix resin in the interlayer molded layer will increase. In addition, air that is trapped during layup and volatile components from the prepreg are released out of the prepreg using the flow of the matrix resin, while at the same time, resin flow into the unimpregnated layer inside the prepreg can be ensured, and the matrix resin can quickly impregnate. As a result, the prepreg consolidation process can be completed, and the fiber reinforced composite material obtained can achieve lower voids and higher impact resistance. If the CV value is too large, the weight fraction of the thermosetting resin that occupies the interlayer molded layer will be lower, the flow of matrix resin and particularly the flow of matrix resin in the interlayer molded layer will be greatly reduced, and air that is trapped during layup as well as volatile components from the prepreg will not be released out of the prepreg, and the matrix resin cannot impregnate into the unimpregnated layer in the prepreg. Furthermore, the prepreg will cure before the prepreg consolidation process is complete, and many voids might occur in the fiber reinforced composite material obtained.

Simultaneously optimizing the particle diameter and CV value of the (C) particles of thermoplastic resin can optimize the flow of the matrix resin in the prepreg even under low pressure conditions such as with out of autoclave molding, and can optimize the flow of resin into the unimpregnated layer in the prepreg so that the matrix resin can quickly impregnate.

With the prepreg of the present invention, the weight fraction of the thermosetting resin in the interlayer molded layer is optimized by controlling the impregnation ratio to a high degree, but by combining with optimization of particle diameter and/or CV value of the aforementioned component (C) the flow of the matrix resin in the prepreg can be optimized even under low pressure conditions such as with out of autoclave molding. Furthermore, air that is trapped during layup and volatile components from the prepreg are released out of the prepreg using the flow of the matrix resin while at the same time resin flow to the unimpregnated layer in the prepreg is ensured and thus the matrix resin can quickly impregnate the fiber layer of the prepreg.

Herein, the particle diameter refers to the particle diameter at each volume % on a cumulative curve where the total volume is 100%, when the particle size distribution is measured by a laser diffraction scattering method. The particle size distribution that is used in the present invention is measured by the laser diffraction scattering method using an LMS-24 manufactured by Seishin Entriprise Co., Ltd.. The particle diameter is determined at 50 volume % (median diameter) and 90 volume % on the cumulative curve of the particle size distribution obtained. Furthermore, the CV value (particle size variation coefficient) that is used with the present invention is calculated by the following equation.

$$\text{Particle diameter CV value (\%)} = (\text{standard deviation of the particle diameter / median diameter}) \times 100$$

With the prepreg of the present invention, the flow of matrix resin out of the prepreg when a degree of vacuum of 3 kPa is applied at 120 °C is between 4 and 7%, particularly preferably between 5 and 6.5%. Optimizing the flow of matrix resin in the prepregs is effective for completing the consolidation process of the prepreg, and therefore if the flow of matrix resin out of the prepreg is too little, the flow of matrix resin in the prepreg will be low and the consolidation process of the prepreg during curing might not be completed. If the flow of matrix resin out of the prepreg is too much, the flow of matrix resin in the prepreg will be low, impregnating into the unimpregnated reinforcing fibers of the prepreg will not be possible, and the consolidation process of the prepreg during curing might not be completed.

Furthermore, the prepreg of the present invention has a gelling time of 100 minutes or longer. A more preferable value is 110 minutes or longer, and a value of 130 minutes or longer is particularly preferable. If the consolidation process is prematurely terminated during prepreg curing, many voids will occur in the fiber reinforced composite material obtained, and therefore sufficient time must be allowed for the matrix resin to flow in order to optimize the flow of matrix resin. If the gelling time is too short, the consolidation process of the prepreg during curing will terminate prematurely, and many voids might occur in the fiber reinforced composite material obtained. The gelling time and the flow of the matrix resin for evaluating the prepreg properties were in conformance with the method shown in JIS K-7071 "Test Method of Prepreg Made of Carbon Fiber and Epoxy Resin", but in order to adapt to out of autoclave molding, the porous release film (perforated FEP) and the glass bleeder cloth were eliminated. Furthermore, the multilayer body was placed between a mold plate and a pressure plate instead of using a press, and after bagging with a bagging film, degassing was performed at a degree of vacuum of 3 kPa. Next, the temperature was increased from 25°C to 120°C at a rate of 1.5°C/minute, and an evaluation was performed at the holding condition of 120°C.

When the prepreg of prevent invention ramps up from a temperate of 25°C with a ramp rate of 1.5°C/min. to a temperature between 60 and 160 °C at a degree of vacuum of 3kPa and maintains at a temperature between 60 and 160 °C, the change in the thickness of the prepreg is preferably 9% or higher after 120 min. from initial ramp. The change in the thickness of the prepreg might stop below 9% after 120 min. from initial ramp, and the consolidation process of the prepreg might be prematurely terminated causing many voids in the fiber reinforced composite material obtained. The prepreg of the present invention can be manufactured by applying the thermosetting resin composition of the present invention onto a release paper using a reverse roller coater or a knife coater or the like to form a resin film, and then impregnating the thermosetting resin composition film on both sides of the reinforcing fibers by laying up, heating, and compressing. Furthermore, a prepreg that is completely covered with matrix resin only on one side can be manufactured by laying up the thermosetting resin composition film on only one side of the reinforcing fibers and then heating and compressing to impregnate. This prepreg contains reinforcing fibers where one side is not impregnated with matrix resin, and therefore this side can act as an air path, so there is an effect of reducing voids in the fiber reinforced composite material obtained. Herein, a partially impregnated prepreg can be manufactured by adjusting the conditions during impregnation such as by reducing temperature, pressure, and time, such that a portion of the reinforcing fibers are not impregnated with thermosetting resin composition. Alternatively, as shown in JP14-249605A, the partially impregnated prepreg can also be manufactured using a film where the thermosetting resin composition coated on the release paper has a shape that does not completely cover the release paper, such as a striped pattern.

With the prepreg of the present invention, the weight of reinforcing fibers per unit area is preferably between 100 and 300 g/$m^2$. If the amount of reinforcing fibers is low, the number of stacking plies required to obtain the desired thickness will need to increase, and the operation may become complex, but if the amount of reinforcing fibers is too high, the draping properties of the prepreg may be inferior.

The fiber reinforced composite material of the present invention can be manufactured by laying up and thermal curing the aforementioned prepreg. Naturally, a fiber reinforced composite material can also be obtained by curing a single layer prepreg. Heating is performed by a device such as an oven, autoclave, or press or the like. From the perspective of low cost, an oven is preferably used. If the prepreg of the present invention is heated and cured in an oven, a molding method is used where a single ply of prepreg or a laminate formed by laying up a plurality of plies, and the ply of prepreg or the laminateis bagged and degassed at a temperature between 20 and 50°C where the degree of vacuum inside the bag is 11 kPa or less, and the temperature is raised to the curing temperature while maintaining the degree of vacuum at 11 kPa or less. If the degree of vacuum is higher than 11 kPa, the flow of matrix resin in the prepreg will be insufficient, and the unimpregnated reinforcing fibers cannot be impregnated with the matrix resin during prepreg curing, so many voids might occur in the fiber reinforced composite material obtained. Herein, degassing is preferably performed at conditions where the degree of vacuum is preferably between 0.1 kPa and 11 kPa, more preferably between 0.1 kPa and 7 kPa. Herein, the curing temperature is preferably between 120 and 200°C, and more preferably between 130 and 180°C. If the curing temperature is too low, the curing time will be long, which may lead to high costs, but if the curing temperature is too high, the thermal shrink while cooling from the curing temperature to room temperature cannot be ignored, and there is a possibility that the mechanical properties of the fiber reinforced composite material obtained will be inferior.

When increasing the temperature from room temperature to the curing temperature, the temperature can be increased at a constant rate up to the curing temperature, or the temperature can be maintained at an intermediate dwell temperature for a fixed period of time and then increased to the curing temperature. In this manner, a curing method where an intermediate temperature is maintained for a fixed period of time and then the temperature is increased to the curing temperature is referred to as step curing, and during step curing, the temperature that is maintained for a fixed period of time is preferably between 60 and 160°C, more preferably between 80 and 150°C, and particularly preferably between 90 and 140°C. Maintaining an intermediate temperature for a fixed period of time in this manner ensures prepreg consolidation due to sufficient flow of the matrix resin and ensures the required time. Therefore, volatile components from the prepreg and air trapped during layup of the prepreg which are factors that hinder the consolidation process can be efficiently removed, and this is particularly useful with the present invention. Herein, if the temperature that is maintained for fixed period of time is too low, the flow of matrix resin in the prepreg will be much too little, and the unimpregnated reinforcing fibers cannot be sufficiently impregnated with the resin, so the consolidation process might terminate prematurely. If the temperature that is maintained for a fixed period of time is too high, the volatile components from the matrix resin will greatly increase, and might hinder the consolidation process.

During step curing, a method of increasing the temperature to the final curing temperature after the thermosetting resin composition has reached a degree of cure of 20% or higher, or a method of increasing the temperature to the final curing temperature after the change in the thickness of the prepreg reaches 9% or higher is preferably used. These methods can be used individually or in combination. The combined use of the two methods means that the volatile components originating from the prepreg are prevented, the matrix resin will sufficiently impregnate the unimpregnated reinforcing fibers in the prepreg, and the prepreg layers will be firmly integrated. In other words, the consolidation process of the prepreg will be completed, and the fiber reinforced composite material obtained can achieve a low void condition, and therefore the combination is preferably used. Furthermore, when these two methods are used in combination, using a method where the change in the thickness of the prepreg reaches 9% or higher, and then the thermosetting resin composition reaches a degree of cure of 20% or higher, and then the temperature is increased to the final curing temperature is particularly preferable. If the thermosetting resin composition reaches a degree of cure of 20% or higher before the change in the thickness of the prepreg reaches 9% or higher, the change in the thickness of the prepreg might stop below 9%, and the consolidation process of the prepreg might be prematurely terminated.

If the temperature is increased to the final curing temperature after the degree of curing has reached 20% or higher, new water vapor and volatile components originating from the thermosetting resin composition will not easily occur while the temperature is rising, and even if they do occur, the surrounding thermosetting resin composition will be sufficiently cured, so the water vapor or volatile components can be prevented from growing into a large void, and this is preferable. If the degree of curing is too low, water vapor and volatile components originating from the thermosetting resin composition might be generated during the step of increasing the temperature to the final curing temperature. Herein, the degree of curing of the thermosetting resin composition is determined by measuring the calorific power of curing ($H_0$) of the thermosetting resin composition immediately after preparing the resin and the residual calorific power of the cured resin composition ($H_1$) using a differential scanning calorimeter (DSC, manufactured by TI Instruments), and then calculating by the equation: DSC degree of curing (%) = $[(H_0 - H_1) \times 100 / H_0]$

If the temperature is increased to the final curing temperature after the change in the thickness of the prepreg reaches 9% or higher, the consolidation process of the prepreg will be completed to the degree that the fiber reinforced composite material obtained can achieve a low void condition, and therefore this is preferable. The change in the thickness of the prepreg refers to the ratio of change between the average thickness ($T_0$) of a panel immediately after the layup of the prepreg and the average thickness ($T_1$) of the prepreg panel during curing, and is determined by measuring the thickness of the panel at nine points including the center of the prepreg panel to determine the average thickness. The change in the prepreg thickness is determined by the following equation:

$$\text{Change in prepreg thickness (\%)} = [(T_0 - T_1) \times 100 / T_0]$$

If this prepreg thickness change ratio is too small, the consolidation process will not be complete and many voids may occur in the resulting fiber reinforced composite material.

The manufacturing method of the fiber reinforced composite material of the present invention preferably is a method where degassing at a degree of vacuum of 11 kPa or less is released after the degree of curing has reached 20% or higher and/or the change in the thickness of the prepreg has reached 9% or higher. Releasing the degassing condition is used in order to prevent evaporation of volatile components originating from the prepreg either during the step of increasing the temperature to the curing temperature or while maintaining at an intermediate temperature or at the curing temperature for a fixed period of time. Herein, the degree of vacuum after releasing the degassing condition can be higher than prior to degassing, and is preferably between 30 kPa and atmospheric pressure, more preferably between 70 kPa and atmospheric pressure. Atmospheric pressure is particularly preferable. The timing for releasing the degassing condition can be at any time after satisfying at least one of the aforementioned conditions. For example, the timing can be while increasing the temperature at a fixed temperature increase rate from room temperature to the curing temperature, or while maintaining at an intermediate temperature for a fixed period of time, or while increasing the temperature to the curing temperature after first maintaining the temperature at an intermediate temperature for a fixed period of time, or while maintaining the temperature at the final curing temperature for fixed period of time.

The manufacturing method of the fiber reinforced composite material of the present invention is a method where curing is performed to satisfy the conditions that the flow of the matrix resin out of the prepreg is between 4 and 7%, and the gelling time at this time is 100 minutes or longer. The flow of the matrix resin out of the prepreg is between 4 and 7%, particularly preferably between 5 and 6.5%. Optimizing the flow of the matrix resin in the prepreg is effective in order to complete the consolidation process of the prepregs, and therefore if the flow of the matrix resin out of the prepreg is too low, the flow of matrix resin in the prepreg will be low and the consolidation process of the prepreg during curing might not be able to be completed. If the flow of matrix resin out of the prepreg is too high, the flow of matrix resin in the prepreg will be small, impregnating the unimpregnated reinforcing fibers in the prepreg will not be possible, and the consolidation process of the prepreg during curing might not be able to be completed. Furthermore, the gelling time is 100 minutes or longer, more preferably 110 minutes or longer, and particularly preferably 130 minutes or longer. If the consolidation process is completed partway through prepreg curing, many voids will occur in the fiber reinforced composite material obtained, so sufficient time must be taken when matrix resin can flow in order to maximize the flow of the matrix resin. If the gelling time is too short, the consolidation process of the prepreg during curing will prematurely terminate, and many voids might occur in the fiber reinforced composite material obtained. In order to determine the curing conditions for manufacturing the fiber reinforced composite material of the present invention, the gelling time and the matrix resin flow were measured in accordance with the method shown in JIS K-7071 "Test Method of Prepreg Made of Carbon Fiber and Epoxy Resin", but in order to adapt to out of autoclave molding, the porous release film (perforated FEP) and the glass bleeder cloth were eliminated.

Furthermore, the laminate body was placed between a mold plate and a pressure plate instead of using a hot press, and after bagging with a backing film, degassing was performed at a degree of vacuum of 3 kPa. Next, the resin flow was measured until the gelling time of the matrix resin under the desired curing conditions, and the flow of the matrix resin and the gelling time were measured. For example, for the case where the temperature is increased from 25°C to 120°C at a fixed rate of increase, maintained at 120°C for 60 minutes, and then increased at a fixed rate of increase to 180°C, and maintained at 180°C for 120 minutes, the resin flow was measured until the gelling time of the matrix resin at those curing conditions, and this matrix resin flow and gelling time were used.

The present invention is described below in further detail using working examples. The following materials were used to obtain the prepreg for each working example.

Carbon fibers

- Torayca (registered trademark) T800S-24K-10E (carbon fibers manufactured by Toray K.K. with a fiber filament count of 24,000, tensile strength of 5.9 GPa, tensile elasticity of 290 GPa, and tensile elongation of 2.0%)

Epoxy Resin

- Bisphenol A type epoxy resin, Araldite (registered trademark) LY1556 (manufactured by Huntsman Advanced Materials)
- Bisphenol A type epoxy resin, Epon (registered trademark) 825 (manufactured by Momentive Specialty Chemicals)
- Tetraglycidyldiaminodiphenylmethane, Araldite (registered trademark) MY9655 (Average EEW: 126g/eq, manufactured by Huntsman Advanced Materials)
- Tetraglycidyldiaminodiphenylmethane, Araldite (registered trademark) MY721 (Average EEW: 112g/eq, manufactured by Huntsman Advanced Materials)
- Diglycidyl-p-phenoxyl-aniline,TOREP(registered trademark) PG-01 (Average EEW:165g/eq, manufactured by Toray Finechemical)

• Thermoplastic Resin

• Polyethersulfone with a terminal hydroxyl group, SUMIKAEXCEL(registered trademark) PES5003P (manufactured by Sumitomo Chemical K.K.)

Hardener

• Dicyandiamide, Dyhard (registered trademark) 100S (manufactured by Alz Chem Trostberg GmbH)

•4,4'-diaminodiphenylsulfone, Aradur (registered trademark) 9664-1 (manufactured by Huntsman Advanced Materials)

•3,3'-diaminodiphenylsulfone, Aradur (registered trademark) 9719-1 (manufactured by Huntsman Advanced Materials)

Accelerator

- 2,4-toluene bisdimethyl urea, OMICURE (registered trademark) U-24 (manufactured by CVC Thermosetting Specialties)

Thermoplastic Resin Particles

- 90 weight parts of transparent polyamide (product name: Grilamid (registered trademark) -TR55, EMSER Werke AG), 7.5 weight parts of epoxy resin (product name: Epicoat (registered trademark) 828, manufactured by Shell Petrochemical), and 2.5 weight parts of hardener (product name: Tomide (registered trademark) #296, manufactured by Fuji Kasei Kogyo Co., Ltd.) were added to a solvent blend containing 300 weight parts of chloroform and 100 weight parts of methanol to make a uniform solution. Next, the uniform solution obtained was atomized using a spray gun for painting, well mixed, and sprayed towards a liquid surface of 3000 weight parts of n-hexane in order to cause the solution to precipitate. The precipitated solid was separated by filtering, thoroughly washed with n-hexane, and then vacuum dried for 24 hours at 100°C to obtain spherical epoxy modified nylon particles. The epoxy modified nylon particles were classified using a CCE Classifier manufactured by CCE Technologies, Inc. The fine particles obtained are shown below.
- Fine particles A with a CV value and 90% particle diameter as shown below:

  90% particle diameter of 28 μm, CV value of 60%

- Fine particles B with a CV value and 90% particle diameter as shown below:

  90% particle diameter of 30 μm, CV value of 40%

- Fine particles C with a CV value and 90% particle diameter as shown below:

  90% particle diameter of 14 μm, CV value of 58%

- Fine particles D with a CV value and 90% particle diameter as shown below:

  90% particle diameter of 15 μm, CV value of 43%

- Fine particles E with a CV value and 90% particle diameter as shown below:

  90% particle diameter of 14 μm, CV value of 28%

- Fine particles F with a CV value and 90% particle diameter as shown below:

  90% particle diameter of 7 μm, CV value of 34%

- Nylon fine particles SP-10 (90% particle diameter of 17 μm, CV value of 48%, manufactured by Toray Industries Inc.)
- Nylon fine particles SP-500 (90% particle diameter of 9 μm, CV value of 55%, manufactured by Toray Industries Inc.)

Thermoplastic Resin Fiber

- TR-55 short fibers obtained by the following manufacturing method

Fibers of transparent polyamide (Grilamid (registered trademark) -TR55, EMSER WERKE AG) sprayed from a die with one orifice were cut to obtain TR-55 short fibers (fiber length 1 mm) with a round cross sectional shape.

The following measurement methods were used to measure the thermosetting resin composition and the prepreg for each working example.

(1) Thermosetting resin viscosity measurement

The thermosetting resin was measured using a dynamic viscoelasticity measuring device (ARES, manufactured by TA Instruments) using parallel plates while simply increasing the temperature at a rate of 2°C/min, with a strain of 100%, frequency of 0.5 Hz, and plate gap of 1 mm, from 50°C to 170°C.

(2) Flow and gelling time of thermosetting resin composition

The gelling time and the matrix resin flow were measured in accordance with the method shown in JIS K-7071 "Test Method of Prepreg Made of Carbon Fiber and Epoxy Resin", but in order to adapt to out of autoclave molding, the porous release film (perforated FEP) and the glass bleeder cloth were eliminated. Furthermore, the laminate body was placed between a mold plate and a pressure plate instead of using a press, and after bagging with a backing film, degassing was performed at a degree of vacuum of 3 kPa. Next, the temperature was increased from 25°C to 120°C at a rate of 1.5°C/minute, and then an evaluation was performed while holding the temperature at 120°C.

(3) Measurement of impregnation ratio of thermosetting resin composition of the prepreg

The prepreg was sandwiched between two surfaces of smooth polytetrafluoroethylene resin plates and gradually cured at 40°C for 10 days to produce plate-like cured prepreg. After curing, a cut was made from a direction orthogonal to the adhesive surface, a photograph was taken of the cross-section using an optical microscope at a zoom of 50X or higher such that the top and bottom surfaces of the prepreg fit within the viewing field. The surface area ratio of the resin impregnated part with regards to the cross-sectional area was calculated and used as the impregnation ratio of the thermosetting resin composition in the prepreg.

(4) Fiber reinforced composite material compressive strength measurement after impact (CAI)

A unidirectional prepreg was quasi-isotropically overlaid to 24 plies in a [+45° / 0° / -45° / 90°] 3s configuration, degassed at 25°C and a degree of vacuum of 3 kPa, and then the temperature was increased at a rate of 1.5°C/min to a temperature of 120°C and maintained for 180 minutes while maintaining the degree of vacuum at 3 kPa, and then increased at a rate of 1.5°C/min to a temperature of 180°C and maintained for 120 minutes to cure the prepreg and produce a laminate body. A sample with a length of 150 mm and a width of 100 mm was cut from this laminate body, and the compressive strength after impact was determined by providing a falling weight impact of 6.7 J/mm on the center of the sample in accordance with SACMA SRM 2R-94. On the other hand, when using plain weave fabric, the prepreg was quasi-isotropically overlaid to 24 plies in a $[(\pm 45)/(0, 90)]_{6s}$ configuration.

(5) Fiber reinforced composite material void ratio measurement

16 plies of unidirectional prepreg in a [0°] structure and degassed at 25°C and a degree of vacuum of 3 kPa, and then the degree of vacuum was maintained at 3 kPa while the temperature was increased at a rate of 1.5°C/min to a temperature of 120°C and maintained for 180 minutes, and then increased at a rate of 1.5°C/min to a temperature of 180°C and maintained for 120 minutes to cure the prepreg and produce a laminate body 300 mm long and 150 mm wide. Three 10 mm long x 10 mm wide sample pieces were cut from this laminate body, and the cross-section was polished, and then three photographs were taken of each piece for a total of nine photographs using an optical microscope at a zoom of 50X or higher such that the top and bottom surfaces of the laminate body fit within the viewing field. The surface area ratio of voids with regards to the cross-sectional area was calculated and the average void ratio of the 9 points was used as the void ratio.

(6) Measurement of impregnation ratio of thermosetting resin composition in prepreg

The prepreg was sandwiched between two surfaces of smooth polytetrafluoroethylene resin plates and bonded, gradually cured at 40°C for 10 days to produce plate-like cured prepreg. After curing, a cut was made from a direction orthogonal to the adhesive surface, a photomicrograph was taken of the cross-section using an optical microscope at a zoom of 50X or higher such that the top and bottom surfaces of the prepreg fit within the viewing field. The surface area ratio of the resin impregnated part with regards to the cross-sectional area was calculated and used as the impregnation ratio of the epoxy resin composition in the prepreg.

(7) Matrix resin flow and gelling time for determining curing conditions

The gelling time and the matrix resin flow were measured in accordance with the method shown in JIS K-7071 "Test Method of Prepreg Made of Carbon Fiber and Epoxy Resin", but in order to adapt to out of autoclave molding, the porous release film (perforated FEP) and the glass bleeder cloth were eliminated. Furthermore, the laminate body was placed between a mold plate and a pressure plate instead of using a press, and after bagging with a backing film, degassing was performed at a degree of vacuum of 3 kPa. Next, the resin flow was measured until the gelling time of the matrix resin under the desired curing conditions, and used as the flow of the matrix resin and the gelling time. For example, for the case where the temperature is increased from 25°C to 120°C at a fixed rate of increase, maintained at 120°C for 60 minutes, and then increased at a fixed rate of increase to 180°C, and maintained at 180°C for 120 minutes, the resin flow was measured until the gelling time of the matrix resin at those curing conditions, and this matrix resin flow and gelling time were used.

Of the following Working Examples, Examples 11-13 and 15-17 are Reference Examples which do not form part of the present invention, provided for information only.

Working Example 1

13 weight parts of PES5003P were added and dissolved in 60 weight parts of Araldite (registered trademark) MY9655 and 40 weight parts of Epon (registered trademark) 825 in a kneader, 20 weight parts of fine particles (A), which are thermoplastic resin particles were kneaded, and then 45 weight parts of Aradur (registered trademark) 9664-1 were kneaded in as a hardener to produce an thermosetting resin composition.

The produced thermosetting resin composition was applied onto release paper using a knife coater to produce two sheets of 52 g/$m^2$ resin film. Next, the aforementioned 2 sheets of fabricated resin film were overlaid on both sides of unidirectionally oriented carbon fibers in the form of a sheet (T800S-12K-10E) and the resin was impregnated using a roller temperature of 100°C and a roller pressure of 0.07 MPa to produce a unidirectional prepreg with a carbon fiber area weight of 190 g/$m^2$ and a matrix resin weight fraction of 35.4%.

The resin flow and the gelling time of the thermosetting resin composition in the prepreg at 120°C, the fraction of thermosetting resin composition in the prepreg, the compressive strength after impact and the void ratio were measured for a fiber reinforced composite material that was produced by the curing method according to the aforementioned (4) and (5). The results obtained are shown in Table 1. The resin flow rate was measured until gelling of the matrix resin in accordance with the curing method, and the results showed that the flow of the matrix resin was 5.8%, and the gelling time was 233 minutes. Furthermore, the results of measuring the degree of curing and the change in the thickness of the prepreg immediately after storing at 120°C for 180 minutes showed that the degree of curing was 28% and the change in the thickness of the prepreg was 10.7%.

Working Examples 2 through 10, and 19

Prepregs were fabricated in a manner similar to working example 1 except that the type and amounts of particles or fibers of thermoplastic resin were changed as shown in Table 1.

The resin flow and the gelling time of the thermosetting resin composition in the prepreg at 120°C, the fraction of thermosetting resin composition in the prepreg, the compressive strength after impact and the void ratio were measured for a fiber reinforced composite material that was produced by the curing method according to the aforementioned (4) and (5).The results obtained are shown in Table 1.

Working Example 11

10 weight parts of PES5003P were added and dissolved in 70 weight parts of Araldite (registered trademark) MY9655 and 30 weight parts of Araldite (registered trademark) LY1556 in a kneader, 20 weight parts of fine particlesA which are thermoplastic resin particles were kneaded, and then 3 weight parts of Dyhard (registered trademark) 100S as a hardener, 10 weight parts of Aradur (registered trademark) 9664-1 were kneaded in, and then 5 weight parts OMICURE (registered trademark) U-24 as an accelerator was kneaded in to produce an thermosetting resin composition.

The produced thermosetting resin composition was applied onto release paper using a knife coater to produce two sheets of 52 g/$m^2$ resin film. Next, the aforementioned two sheets of fabricated resin film were overlaid on both sides of unidirectionally oriented carbon fibers in the form of a sheet (T800S-12K-10E) and the resin was impregnated using a roller temperature of 100°C and a roller pressure of 0.07 MPa to produce a unidirectional prepreg with a carbon fiber area weight of 190 g/$m^2$ and a matrix resin weight fraction of 35.4%.

The resin flow of the thermosetting resin composition in the prepreg, the gelling time at 120 °C, and the impregnation ratio, as well as the compressive strength of the fiber reinforced composite material after impact, and the void ratio were measured using the unidirectional prepreg that was produced. The results obtained are shown in Table 1.The resin flow rate was measured until gelling of the matrix resin in accordance with the curing method, and the results showed that the flow of the matrix resin was 5.8%, and the gelling time was 233 minutes. Furthermore, the results of measuring the degree of curing immediately after storing at 120°C for 180 minutes showed that the degree of curing was 28%.

Working Example 12

Prepregs were fabricated in a manner similar to working example 11 except that the type of particles of thermoplastic resin was changed as shown in Table 1.

The resin flow of the thermosetting resin composition in the prepreg, the gelling time at 120 °C, and the impregnation ratio, as well as the compressive strength of the fiber reinforced composite material after impact, and the void ratio were measured using the unidirectional prepreg that was produced. The results obtained are shown in Table 1.

Working Examples 13 through 16, 18, and Comparative Examples 1 through 2

Prepregs were manufactured in a manner similar to working example 1, except that the roller temperature of working example 13 and 18 was 80°C, the roller temperature of working example 14 was 120°C and the roller pressure was 0.1 MPa, the roller temperature of working example 15 was 60°C, the roller temperature of working example 16 was 120°C and the roller pressure was 0.14 MPa, the roller temperature of comparative example 1 was 90°C, the roller temperature of comparative example 2 was 140°C and the roller pressure was 0.14 MPa.

Working Example 17, 28, 29, and Comparative Examples 3 and 4

Prepregs were manufactured in a manner similar to working example 1, except that the area weight of the resin film of working example 17 was 46.8 $g/m^2$ and the roller pressure was 0.1 MPa, the area weight of the resin film was 44.7 g/m2 in working example 28 and the roller pressure was 0.1 MPa, the area weight of the resin film was 58.22 g/m2 in working example 29, the roller temperature was 100°C, and the roller pressure was 0.1 MPa, the area weight of the resin film was 40.7 $g/m^2$ in comparative example 3 and the roller temperature was 120°C, and the area weight of the resin film of comparative example 4 was 77.7 $g/m^2$, the roller temperature was 90°C, and the roller pressure was 0.1 MPa.

Working Example 20

The produced thermosetting resin composition prepared in working example 1 was applied onto release paper using a knife coater to produce one sheet of 127 $g/m^2$ resin film. Next, the aforementioned sheet of fabricated resin film was overlaid on one side of a plain weave fabric made from T800H-6K-40B, and the resin was impregnated using a roller temperature of 120°C and a roller pressure of 0.1 MPa to produce a unidirectional prepreg with a carbon fiber area weight of 190 $g/m^2$ and a matrix resin weight fraction of 40%. The epoxy resin composition content in the prepreg, which has a plain weave fabric, was 52%. The compressive strength measurement after impact and the void ratio of the fiber reinforced composite material were measured and the results were 290 MPa and 0.5% respectively.

Working Example 21

A unidirectional prepreg was fabricated by the same method as working example 1. When measuring the compressive strength and the void content of the fiber reinforced composite material after impact using the fabricated unidirectional prepreg, a fiber reinforced composite material was fabricated using the following curing method that differed from working examples 1 through 20 and comparative examples 1 through 4. As for the measurement method, evaluation was performed using the aforementioned measurement methods of (4) and (5).

A unidirectional prepreg was overlaid with a multilayer composition according to the aforementioned (4) and (5), degassed at 25°C and a degree of vacuum of 3 kPa, and then the temperature was increased at a rate of 1.5°C/min to a temperature of 180°C and maintained for 120 minutes while maintaining the degree of vacuum at 3 kPa, to cure the prepreg and produce a laminate body.

The flow of the matrix resin and the gelling time of the curing method were measured, and the results were 7.5% and 93minutes respectively. The compressive strength measurement after impact and the void ratio of the fiber reinforced composite material were measured and the results were 253 MPa and 2.0% respectively.

Working Example 22

A unidirectional prepreg was fabricated by the same method as working example 1. When measuring the compressive strength and the void content of the fiber reinforced composite material after impact using the fabricated unidirectional prepreg, a fiber reinforced composite material was fabricated using the following curing method that differed from working examples 1 through 20 and comparative examples 1 through 4. The measurement method made in evaluation using the aforementioned measurement methods of (4) and (5).

A unidirectional prepreg was overlaid with a multilayer composition according to the aforementioned (4) and (5), degassed at 25°C and a degree of vacuum of 3 kPa, and then the temperature was increased at a rate of 1.5°C/min to a temperature of 120°C and maintained for 120 minutes while maintaining the degree of vacuum at 3 kPa, and then increased at a rate of 1.5°C/min to a temperature of 180°C and maintained for 120 minutes to cure the prepreg and produce a laminate body. The flow of the matrix resin and the gelling time of the curing method were measured, and the results were 6.1% and 233 minutes respectively. Furthermore, the results of measuring the degree of curing and the change in the thickness of the prepreg immediately after storing at 120°C for 120 minutes so that the degree of curing was 17.3% and the change in the thickness of the prepreg was 10.2%. The compressive strength measurement after impact and the void ratio of the fiber reinforced composite material were measured and the results were 268 MPa and 1.7% respectively.

Working Example 23

A unidirectional prepreg was fabricated by the same method as working example 1. When measuring the compressive strength and the void content of the fiber reinforced composite material after impact using the fabricated unidirectional prepreg, a fiber reinforced composite material was fabricated using the following curing method that differed from working examples 1 through 20 and comparative examples 1 through 4. For the measurement method, an evaluation was performed using the aforementioned measurement methods of (4) and (5).

A unidirectional prepreg was overlaid with a multilayer composition according to the aforementioned (4) and (5), degassed at 25°C and a degree of vacuum of 3 kPa, and then the temperature was increased at a rate of 1.5°C/min to a temperature of 90°C and maintained for 60 minutes while maintaining the degree of vacuum at 3 kPa, and then increased at a rate of 1.5°C/min to a temperature of 180°C and maintained for 120 minutes to cure the prepreg and produce a laminate body. The flow of the matrix resin and the gelling time of the curing method were measured, and the results were 7.7% and 153minutes respectively. Furthermore, the results of measuring the degree of curing and the change in the thickness of the prepreg immediately after storing at 90°C for 60 minutes so that the degree of curing was 0.6% and the change in the thickness of the prepreg was 2.3%. The compressive strength measurement after impact and the void ratio of the fiber reinforced composite material were measured and the results were 257 MPa and 1.0% respectively.

Working Example 24

A unidirectional prepreg was fabricated by the same method as working example 1. When measuring the compressive strength and the void content of the fiber reinforced composite material after impact using the fabricated unidirectional prepreg, a fiber reinforced composite material was fabricated using the following curing method that differed from working examples 1 through 20 and comparative examples 1 through 4. For the measurement method, an evaluation was performed using the aforementioned measurement methods of (4) and (5).

A unidirectional prepreg was overlaid with a multilayer composition according to the aforementioned (4) and (5), degassed at 25°C and a degree of vacuum of 3 kPa, and then the temperature was increased at a rate of 1.5°C/min to a temperature of 120°C and maintained for 240 minutes while maintaining the degree of vacuum at 3 kPa, and then increased at a rate of 1.5°C/min to a temperature of 180°C and maintained for 120 minutes to cure the prepreg and produce a laminate body. The flow of the matrix resin and the gelling time of the curing method were measured, and the results were 5.5% and 257minutes respectively. Furthermore, the results of measuring the degree of curing and the change in the thickness of the prepreg immediately after storing at 120°C for 240 minutes so that the degree of curing was 36% and the change in the thickness of the prepreg was 11.6%. The compressive strength measurement after impact and the void ratio of the fiber reinforced composite material were measured and the results were 304 MPa and 0.1 % respectively.

Working Example 25

A unidirectional prepreg was fabricated by the same method as working example 1. When measuring the compressive strength and the void content of the fiber reinforced composite material after impact using the fabricated unidirectional prepreg, a fiber reinforced composite material was fabricated using the following curing method that differed from working examples 1 through 20 and comparative examples 1 through 4. For the measurement method, an evaluation was performed using the aforementioned measurement methods of (4) and (5).

A unidirectional prepreg was overlaid with a multilayer composition according to the aforementioned (4) and (5), degassed at 25°C and a degree of vacuum of 3 kPa, and then the temperature was increased at a rate of 1.5°C/min to a temperature of 150°C and maintained for 30 minutes while maintaining the degree of vacuum at 3 kPa, and then increased at a rate of 1.5°C/min to a temperature of 180°C and maintained for 120 minutes to cure the prepreg and produce a laminate body. The flow of the matrix resin and the gelling time of the curing method were measured, and the results were 6.9% and 110minutes respectively. Furthermore, the results of measuring the degree of curing and the change in the thickness of the prepreg immediately after storing at 150°C for 30 minutes so that the degree of curing was 26% and the change in the thickness of the prepreg was 10.8%. The compressive strength measurement after impact and the void ratio of the fiber reinforced composite material were measured and the results were 290 MPa and 0.7% respectively.

Working Example 26

A fiber reinforced composite material was fabricated by the same curing method as working example 21, except that the degassing was performed at a degree of vacuum from 3 kPa to atmospheric pressure immediately after reaching 180°C. Furthermore, the results of measuring the degree of curing and the change in the thickness of the prepreg immediately after the temperature reached 180°C showed that the degree of curing was 23% and the change in the thickness of the prepreg was 9.4%. The compressive strength measurement after impact and the void ratio of the fiber reinforced composite material were measured and the results were 277 MPa and 1.1 % respectively.

Working Example 27

A fiber reinforced composite material was fabricated by the same curing method as working example 22, except that the degassing was performed at a degree of vacuum from 3 kPa to atmospheric pressure immediately after storing for 120 minutes at 120°C. The compressive strength measurement after impact and the void ratio of the fiber reinforced composite material were measured and the results were 299 MPa and 0.5% respectively.

Working Example 30

13 weight parts of PES5003P were added and dissolved in 60 weight parts of Araldite (registered trademark) MY9655 and 40 weight parts of TOREP PG-01 in a kneader, 20 weight parts of fine particles (A), which are thermoplastic resin particles were kneaded, and then 45 weight parts of Aradur (registered trademark) 9664-1 were kneaded in as a hardener to produce a thermosetting resin composition.

The produced thermosetting resin composition was applied onto release paper using a knife coater to produce two sheets of 52 g/$m^2$ resin film. Next, the aforementioned 2 sheets of fabricated resin film were overlaid on both sides of unidirectionally oriented carbon fibers in the form of a sheet (T800S-12K-10E) and the resin was impregnated using a roller temperature of 90°C and a roller pressure of 0.07 MPa to produce a unidirectional prepreg with a carbon fiber area weight of 190 g/$m^2$ and a matrix resin weight fraction of 35.4%.

The resin flow and the gelling time of the thermosetting resin composition in the prepreg at 120°C, the fraction of thermosetting resin composition in the prepreg, the compressive strength after impact and the void ratio were measured for a fiber reinforced composite material that was produced by the curing method according to the aforementioned (4) and (5). The results obtained are shown in Table 1. The resin flow rate was measured until gelling of the matrix resin in accordance with the curing method, and the results showed that the flow of the matrix resin was 6.8%, and the gelling time was 345 minutes.

| Item | | | Unit | 1 |
|---|---|---|---|---|
| Thermosetting resin ( Essential component B ) | Epoxy Resin | MY9655 | (Weight Parts) | 60 |
| | | MY721 | (Weight Parts) | |
| | | Epon825 | (Weight Parts) | 40 |
| | | TOREP PG-01 | (Weight Parts) | |
| | | LY1556 | (Weight Parts) | |
| | Thermoplastic Resin | SUMIKA EXCEL 5003P | (Weight Parts) | 13 |
| | Hardener | Aradur 9664-1 | (Weight Parts) | 45 |
| | | Aradur 9719-1 | (Weight Parts) | |
| | | Dyhard 100S | (Weight Parts) | |
| | Accelerator | Omnicure U-24 | (Weight Parts) | |
| Particles or fibers of thermoplastic resin ( Essential component C ) | Thermoplastic Resin Particles | Fine particles A ( 90% particle diameter 28μm、 CV 60% ) | (Weight Parts) | 20 |
| | | Fine particles B ( 90% particle diameter 30μm、 CV 40% ) | (Weight Parts) | |
| | | Fine particles C ( 90% particle diameter 14μm、 CV 58% ) | (Weight Parts) | |
| | | Fine particles D ( 90% particle diameter 15μm、 CV 43% ) | (Weight Parts) | |
| | | Fine particles E ( 90% particle diameter 14μm、 CV 28% ) | (Weight Parts) | |
| | | Fine particles F ( 90% particle diameter 7μm、 CV 34% ) | (Weight Parts) | |
| | | SP-10 ( 90% particle diameter 17μm、 CV 48% ) | (Weight Parts) | |
| | | SP-500 ( 90% particle diameter 9μm、 CV 55% ) | (Weight Parts) | |
| | Thermoplastic Resin Fiber | TR-55 short fibers | (Weight Parts) | |
| Epoxy Resin Properties | Thermosetting resin viscosity at 50°C | | ( Pa•s) | 430 |
| | Minimum viscosity of thermosetting resin | | ( Pa•s) | 0.6 |
| Prepreg Properties | Gelling time at 120°C of thermosetting resin composition | | (min) | 288 |
| | Flow of thermosetting resin composition | | ( % ) | 5.4 |
| | Weight ratio of thermosetting resin composition | | ( % ) | 35.4 |
| | Thermosetting Resin Composition Impregnation Ratio of the Prepreg | | ( % ) | 31 |
| Fiber Reinforced Composite Material Properties | Void Ratio | | ( % ) | 1.5 |
| | CAI | | (MPa) | 276 |
| Note: Examples 21-27 are the same as Example 1 except differing in the cure temperature. Therefore, Examples 21-27 are not included in the above table. | | | | |

| Working Example | | | | | | | | | | | | | | | | | | |
|---|---|---|---|---|---|---|---|---|---|---|---|---|---|---|---|---|---|---|
| 2 | 3 | 4 | 5 | 6 | 7 | 8 | 9 | 10 | 11 | 12 | 13 | 14 | 15 | 16 | 17 | 18 | 19 | 20 |
| 60 | 60 | 60 | 60 | 60 | 60 | 60 | 60 | 60 | 70 | 70 | 60 | 60 | 60 | 60 | 60 | 60 | | 60 |
| | | | | | | | | | | | | | | | | | 60 | |
| 40 | 40 | 40 | 40 | 40 | 40 | 40 | 40 | 40 | | | 40 | 40 | 40 | 40 | 40 | 40 | 40 | 40 |
| | | | | | | | | | 30 | 30 | | | | | | | | |
| 13 | 13 | 13 | 13 | 13 | 13 | 13 | 13 | 13 | 10 | 10 | 6 | 18 | 13 | 13 | 13 | 13 | 18 | 13 |
| 45 | 45 | 45 | 45 | 45 | 45 | 45 | 45 | 45 | 10 | 10 | 45 | 45 | 45 | 45 | 45 | 35 | 45 | 45 |
| | | | | | | | | | 5 | 5 | | | | | | | | |
| | | | | | | | | | 3 | 3 | | | | | | | | |
| | | | | | | | | | 20 | | 20 | 20 | 20 | 20 | 20 | 20 | 20 | 20 |
| 20 | | | | | | | | | | | | | | | | | | |
| | 20 | | | | | | | | | | | | | | | | | |
| | | 20 | | | | | | 14 | | | | | | | | | | |
| | | | 20 | | | | | | | 20 | | | | | | | | |
| | | | | 20 | | | | | | | | | | | | | | |
| | | | | | 20 | | | | | | | | | | | | | |
| | | | | | | 20 | | | | | | | | | | | | |
| | | | | | | | 20 | | | | | | | | | | | |
| 430 | 430 | 430 | 430 | 430 | 430 | 430 | 430 | 430 | 547 | 547 | 87 | 1678 | 430 | 430 | 430 | 150 | 456 | 430 |
| 0.6 | 0.6 | 0.6 | 0.6 | 0.6 | 0.6 | 0.6 | 0.6 | 0.6 | 5.8 | 5.8 | 0.2 | 3.5 | 0.6 | 0.6 | 0.6 | 0.2 | 0.8 | 0.6 |
| 288 | 288 | 288 | 288 | 288 | 288 | 288 | 288 | 288 | 10 | 9 | 280 | 301 | 288 | 288 | 288 | 354 | 297 | 288 |
| 5.7 | 6.0 | 6.1 | 6.3 | 6.5 | 6.1 | 6.3 | 3.1 | 6.9 | 2.9 | 4.2 | 8.2 | 4.2 | 5.5 | 5.2 | 3.4 | 6.3 | 5.3 | 5.4 |
| 35.4 | 35.4 | 35.4 | 35.4 | 35.4 | 35.4 | 35.4 | 35.4 | 35.4 | 35.4 | 35.4 | 35.4 | 35.4 | 35.4 | 35.4 | 33 | 35.4 | 35.4 | 40.0 |
| 33 | 30 | 29 | 32 | 31 | 32 | 31 | 32 | 36 | 30 | 32 | 33 | 30 | 3 | 94 | 32 | 36 | 33 | 52 |
| 1.2 | 0.8 | 0.6 | 0.4 | 0.2 | 0.7 | 0.5 | 1.8 | 0.4 | 2.0 | 0.9 | 1.8 | 1.7 | 0.6 | 2.0 | 1.7 | 0.4 | 1.0 | 0.5 |
| 270 | 285 | 296 | 303 | 306 | 306 | 310 | 270 | 252 | 241 | 291 | 263 | 265 | 282 | 259 | 260 | 289 | 283 | 290 |
| | | | | | | | | | | | | | | | | | | |

| | | | Comparative Examples | | | |
|---|---|---|---|---|---|---|
| 28 | 29 | 30 | 1 | 2 | 3 | 4 |
| 60 | 60 | 60 | 60 | 60 | 60 | 60 |
| 40 | 40 | 40 | 40 | 40 | 40 | 40 |
| 13 | 13 | 16 | 13 | 13 | 13 | 13 |
| 45 | 45 | 45 | 45 | 45 | 45 | 45 |
| | | | | | | |
| 20 | 20 | 20 | | 20 | 20 | 20 |
| | | | | | | |
| 430 | 430 | 104 | 430 | 430 | 430 | 430 |
| 0.6 | 0.6 | 0.2 | 0.6 | 0.6 | 0.6 | 0.6 |
| 288 | 288 | 345 | 286 | 288 | 288 | 288 |
| 3.4 | 3.4 | 6.8 | 9.1 | 5.2 | 2.1 | 8.7 |
| 32 | 38 | 35.4 | 35.4 | 35.4 | 30.0 | 45.0 |
| 30 | 40 | 39 | 31 | 100 | 34 | 35 |
| 1.0 | 0.4 | 1.2 | 0.5 | 8.3 | 4.2 | 1.2 |
| 284 | 303 | 275 | 152 | 192 | 230 | 251 |
| | | | | | | |

## Claims

1. A prepreg having a structure comprising a first layer and a second layer, wherein the prepreg comprises component (A) comprising a reinforcing fiber, component (B) comprising a thermosetting resin, and component (C) comprising a particle or a fiber of a thermoplastic resin, wherein the component (C) is substantially locally distributed in the first layer and the prepreg is a partially impregnated prepreg in which a portion of the reinforcing fiber is unimpregnated and the remaining reinforcing fiber is impregnated with the thermosetting resin composition containing (B) and (C), and the impregnation ratio of the thermosetting resin composition in the prepreg is from 10% to 90%, wherein the thermosetting resin has a viscosity at 50°C of between 100 and 2,000 Pa.s and a minimum viscosity of between 0.1 and 15 Pa.s, the weight fraction of the thermosetting resin composition comprising components (B) and (C) is from 33 to 42%, the amount of matrix resin flowing out of the prepreg at a degree of vacuum of 3 kPa at 120 °C is between 4.0 and 7.0%, and the gelling time is 100 minutes or longer.

2. The prepreg according to claim 1, wherein the thermosetting resin is at least one type of an epoxy resin selected from the group consisting of a tetraglycidyl amine type epoxy resin, a bisphenol A type epoxy resin, a bisphenol F type epoxy resin, a glycidyl aniline type epoxy resin, an aminophenol type epoxy resin, a novolac type epoxy resin, and combinations thereof.

3. The prepreg according to claim 2, wherein: (i) the tetraglycidyl amine type epoxy resin has an epoxide equivalent weight (EEW) in the range of 100 to 115; and/or (ii) the aminophenol type epoxy resin has an EEW in the range of 90 to 104; and/or (iii) the bisphenol A type epoxy resin has an EEW in the range of 170 to 180; and/or (iv) the bisphenol F type epoxy resin has an EEW in the range of 150 to 165.

4. The prepreg according to claim 1, wherein when a particle size distribution is measured by a laser diffraction scattering method and a cumulative curve is determined with the total volume as 100%, a particle diameter of the component (C) having a cumulative curve of 90% is between 5 and 20 $\mu$m.

5. The prepreg according to claim 4, wherein when the particle size distribution is measured by a laser diffraction scattering method and a cumulative curve is determined with the total volume being 100%, the particle diameter of the component (C) having a cumulative curve of 90% is between 5 and 15 $\mu$m.

6. The prepreg according to claim 1, wherein when the particle size distribution is measured by a laser diffraction scattering method, the component (C) has a CV value of 45% or less.

7. The prepreg according to claim 1, wherein only one side of the prepreg is covered substantially by the thermosetting resin composition comprising components (B) and (C).

8. The prepreg according to claim 1, wherein when the prepreg ramps up from a temperature of 25°C with a ramp rate of 1.5°C/min. to a temperature between 60 and 160 °C at a degree of vacuum of 3kPa and maintains at a temperature between 60 and 160 °C, a change in a thickness of the prepreg is 9% or higher after 120 min.

9. A fiber reinforced composite material comprising the prepreg of claim 1,
wherein the prepreg is thermally cured.

10. A method for manufacturing a fiber reinforced composite material, comprising: laying up the prepreg of claim 1, and molding the prepreg using a vacuum pump and oven, wherein a curing method achieves an amount of the matrix resin flowing out of the prepreg until the thermosetting resin gels at a degree of vacuum of 3 kPa of between 4.0 and 7.0%, and a gelling time of 100 min or longer.

11. A method for manufacturing a fiber reinforced composite material, according to claim 10, wherein molding comprises: (i) degassing at a temperature between 20 and 50 °C and at a degree of vacuum of 11 kPa or less, and curing by increasing the temperature to a curing temperature while maintaining the degree of vacuum at 11 kPa or less; and/or (ii) wherein during molding the prepreg is maintained at a temperature between 60 and 160 °C, and then after a degree of curing of the thermosetting resin has reached 20% or higher, and/or the change in the thickness of the prepreg is 9% or higher, a step curing method is performed up to the final curing temperature.

12. A method for manufacturing a fiber reinforced composite material, according to claim 10 or 11, wherein during molding after the degree of curing of the thermosetting resin reaches 20% or higher while curing the prepreg, degassing conditions are relieved.

13. A method for manufacturing a fiber reinforced composite material, according to any one of claims 11 to 12, wherein during molding after the change in the thickness before and after curing the prepreg reaches 9% or higher, degassing conditions are relieved.

14. The prepreg according to claim 1, wherein: (i) the first layer is at or near a surface of the prepreg up to a depth of 20% from the surface and/or (ii) the first layer comprises an interlayer molded layer and the second layer comprises a reinforcing fiber layer comprising the reinforcing fiber.

**Patentansprüche**

1. Prepreg, das eine Struktur aufweist, die eine erste Schicht und eine zweite Schicht umfasst, worin das Prepreg eine Verstärkungsfasern umfassende Komponente (A), eine ein wärmehärtendes Harz umfassende Komponente (B) und eine Teilchen oder Fasern aus einem thermoplastischen Harz umfassende Komponente (C) umfasst, wobei die Komponente (C) im Wesentlichen lokal in der ersten Schicht verteilt ist und das Prepreg ein teilweise imprägniertes Prepreg ist, in dem ein Teil der Verstärkungsfasern nicht imprägniert ist und die restlichen Verstärkungsfasern mit der (B) und (C) umfassenden wärmehärtbaren Harzzusammensetzung imprägniert sind, und der Anteil an Imprägnierung mit der wärmehärtbaren Harzzusammensetzung in dem Prepreg zwischen 10 % und 90 % beträgt, wobei das wärmehärtbare Harz bei 50 °C eine Viskosität zwischen 100 und 2.000 Pa.s und eine minimale Viskosität zwischen 0,1 und 15 Pa.s aufweist, wobei der Gewichtsteil der die Komponenten (B) und (C) umfassenden wärmehärtbaren Harzzusammensetzung 33 bis 42 % beträgt, wobei die Menge an Matrixharz, das bei einer Vakuumgüte von 3 kPa und 120 °C aus dem Prepreg ausfließt, zwischen 4,0 und 7,0 % beträgt und die Gelierungszeit 100 min oder länger beträgt.

2. Prepreg nach Anspruch 1, worin das wärmehärtbare Harz zumindest eine Art eines Epoxidharzes ist, das aus der aus einem Epoxidharz vom Tetraglycidylamin-Typ, einem Epoxidharz vom Bisphenol-A-Typ, einem Epoxidharz vom Bisphenol-F-Typ, einem Epoxidharz vom Glycidylanilin-Typ, einem Epoxidharz vom Aminphenol-Typ, einem Epoxidharz vom Novolac-Typ und Kombinationen davon bestehenden Gruppe ausgewählt ist.

3. Prepreg nach Anspruch 2, worin: (i) das Epoxidharz vom Tetraglycidylamin-Typ ein Epoxid-Äquivalentgewicht (EEG) im Bereich von 100 bis 115 aufweist; und/oder (ii) das Epoxidharz vom Aminophenol-Typ ein EEG im Bereich von 90 bis 104 aufweist; und/oder (iii) das Epoxidharz vom Bisphenol-A-Typ ein EEG im Bereich von 170 bis 180 aufweist;

und/oder (iv) das Epoxidharz vom Bisphenol-F-Typ ein EEG im Bereich von 150 bis 165 aufweist.

**4.** Prepreg nach Anspruch 1, worin, wenn die Teilchengrößenverteilung mittels eines Laserbeugungsverfahrens gemessen und eine kumulative Kurve mit dem Gesamtvolumen von 100 % bestimmt wird, der Teilchendurchmesser der Komponente (C), der eine kumulative Kurve von 90 % aufweist, zwischen 5 und 20 $\mu$m beträgt.

**5.** Prepreg nach Anspruch 4, worin, wenn die Teilchengrößenverteilung mittels eines Laserbeugungsverfahrens gemessen und eine kumulative Kurve mit dem Gesamtvolumen von 100 % bestimmt wird, der Teilchendurchmesser der Komponente (C), der eine kumulative Kurve von 90 % aufweist, zwischen 5 und 15 $\mu$m beträgt.

**6.** Prepreg nach Anspruch 1, worin die Komponente (C) einen CV-Wert von 45 % oder weniger aufweist, wenn die Teilchengrößenverteilung mittels eines Laserbeugungsverfahrens gemessen wird.

**7.** Prepreg nach Anspruch 1, worin nur eine Seite des Prepregs von der die Komponenten (B) und (C) umfassenden wärmehärtbaren Harzzusammensetzung im Wesentlichen bedeckt wird.

**8.** Prepreg nach Anspruch 1, worin, wenn die Temperatur des Prepregs von 25 °C mit einer Anstiegsrate von 1,5 °C/min bei einer Vakuumgüte von 3 kPa auf eine Temperatur zwischen 60 und 160 °C ansteigt und bei einer Temperatur zwischen 60 und 160 °C gehalten wird, die Änderung der Dicke des Prepregs nach 120 min 9 % oder mehr beträgt.

**9.** Faserverstärktes Verbundmaterial, das ein Prepreg nach Anspruch 1 umfasst, worin das Prepreg wärmegehärtet ist.

**10.** Verfahren zur Herstellung eines faserverstärkten Verbundmaterials, das Folgendes umfasst:

Auslegen eines Prepreg nach Anspruch 1 und Formen des Prepregs unter Verwendung einer Vakuumpumpe und eines Ofens, wobei ein Härtungsverfahren bewirkt, dass eine Menge des Matrixharzes zwischen 4,0 und 7,0 % aus dem Prepreg ausfließt, bis das wärmehärtbare Harz bei einem Vakuumgüte von 3 kPa nach einer Gelierungszeit von 100 min oder länger geliert.

**11.** Verfahren zur Herstellung eines faserverstärkten Verbundmaterials nach Anspruch 10, worin das Formen Folgendes umfasst: (i) Entgasen bei einer Temperatur zwischen 20 und 50 °C und bei einer Vakuumgüte von 11 kPa oder weniger und Härten durch Erhöhen der Temperatur auf eine Härtungstemperatur, während die Vakuumgüte bei 11 kPa oder weniger gehalten wird; und/oder (ii) worin das Prepreg während des Formens bei einer Temperatur zwischen 60 und 160 °C gehalten wird und dann, nachdem der Härtungsgrad des wärmehärtbaren Harzes 20 % oder mehr erreicht hat und/oder die Änderung der Dicke des Prepregs 9 % oder mehr beträgt, ein Stufenhärtungsverfahren bis zur endgültigen Härtungstemperatur durchgeführt wird.

**12.** Verfahren zur Herstellung eines faserverstärkten Verbundmaterials nach Anspruch 10 oder 11, worin die Entgasungsbedingungen während des Formens aufgehoben werden, nachdem der Härtungsgrad des wärmehärtbaren Harzes beim Härten des Prepregs 20 % oder mehr erreicht hat.

**13.** Verfahren zur Herstellung eines faserverstärkten Verbundmaterials nach einem der Ansprüche 11 bis 12, worin die Entgasungsbedingungen während des Formens aufgehoben werden, nachdem die Änderung der Dicke vor und nach dem Härten des Prepregs 9 % oder mehr erreicht hat.

**14.** Prepreg nach Anspruch 1, worin: (i) sich die erste Schicht an oder nahe an einer Oberfläche des Prepregs bis zu einer Tiefe von 20 % von der Oberfläche befindet und/oder (ii) die erste Schicht eine geformte Zwischenschicht umfasst und die zweite Schicht eine die Verstärkungsfasern umfassende Verstärkungsfaserschicht umfasst.

## Revendications

**1.** Préimprégné ayant une structure comprenant une première couche et une deuxième couche, dans lequel le préimprégné comprend le composant (A) comprenant une fibre de renfort, le composant (B) comprenant une résine thermodurcissable, et le composant (C) comprenant une particule ou une fibre d'une résine thermoplastique, dans lequel le composant (C) est distribué sensiblement localement dans la première couche et le préimprégné est un préimprégné partiellement imprégné dans lequel une part de la fibre de renfort est non imprégnée et la fibre de renfort restante est imprégnée avec la composition de résine thermodurcissable contenant (B) et (C), et le rapport d'imprégnation de la composition de résine thermodurcissable du préimprégné est de 10 % à 90 %, dans lequel la résine thermodurcissable a une viscosité à 50 °C située entre 100 et 2 000 Pa.s et une viscosité minimale située entre 0,1 et 15 Pa.s, la fraction pondérale de la composition de résine thermodurcissable comprenant les composants (B) et (C) est de 33 à 42 %, la quantité de résine de matrice sortant du préimprégné à un degré de vide de 3 kPa à 120 °C se situe entre 4,0 et 7,0 %, et le temps de gélification est supérieur ou égal à 100 minutes.

2. Préimprégné selon la revendication 1, dans lequel la résine thermodurcissable est au moins un type d'une résine époxyde choisie dans le groupe constituée d'une résine époxyde de type tétraglycidylamine, d'une résine époxyde de type bisphénol A, d'une résine époxyde de type bisphénol F, d'une résine époxyde de type glycidylaniline, d'une résine époxyde de type aminophénol, d'une résine époxyde de type novolaque, et de combinaisons de celles-ci.

3. Préimprégné selon la revendication 2, dans lequel : (i) la résine époxyde de type tétraglycidylamine a un poids équivalent d'époxyde (PEE) dans la plage de 100 à 115 ; et/ou (ii) la résine époxyde de type aminophénol a un PEE dans la plage de 90 à 104 ; et/ou (iii) la résine époxyde de type bisphénol A a un PEE dans la plage de 170 à 180 ; et/ou (iv) la résine époxyde de type bisphénol F a un PEE dans la plage de 150 à 165.

4. Préimprégné selon la revendication 1, dans lequel lorsqu'une distribution granulométrique est mesurée par un procédé de dispersion par diffraction laser et qu'une courbe cumulée est déterminée avec le volume total valant 100 %, un diamètre des particules du composant (C) ayant une courbe cumulée de 90 % se situe entre 5 et 20 $\mu$m.

5. Préimprégné selon la revendication 4, dans lequel lorsque la distribution granulométrique est mesurée par un procédé de dispersion par diffraction laser et qu'une courbe cumulée est déterminée avec le volume total valant 100 %, le diamètre des particules du composant (C) ayant une courbe cumulée de 90 % se situe entre 5 et 15 $\mu$m.

6. Préimprégné selon la revendication 1, dans lequel lorsque la distribution granulométrique est mesurée par un procédé de dispersion par diffraction laser, le composant (C) a une valeur CV inférieure ou égale à 45 %.

7. Préimprégné selon la revendication 1, dans lequel seul un côté du préimprégné est sensiblement recouvert de la composition de résine thermodurcissable comprenant les composants (B) et (C).

8. Préimprégné selon la revendication 1, dans lequel lorsque le préimprégné passe d'une température de 25 °C avec une vitesse de montée de 1,5 °C/min à une température située entre 60 et 160 °C à un degré de vide de 3 kPa et est maintenu à une température située entre 60 et 160 °C, un changement d'épaisseur du préimprégné est supérieur ou égal à 9 % après 120 min.

9. Matériau composite renforcé par des fibres comprenant le préimprégné selon la revendication 1, dans lequel le préimprégné est durci par voie thermique.

10. Procédé de fabrication d'un matériau composite renforcé par des fibres, comprenant : la disposition du préimprégné selon la revendication 1, et le moulage du préimprégné à l'aide d'une pompe à vide et d'un four, dans lequel un procédé de durcissement permet d'obtenir une quantité de la résine de matrice sortant du préimprégné jusqu'à gélification de la résine thermodurcissable à un degré de vide de 3 kPa située entre 4,0 et 7,0 %, et un temps de gélification supérieur ou égal à 100 min.

11. Procédé de fabrication d'un matériau composite renforcé par des fibres, selon la revendication 10, dans lequel le moulage comprend : (i) un dégazage à une température située entre 20 et 50 °C et à un degré de vide inférieur ou égal à 11 kPa, et un durcissement par élévation de la température à une température de durcissement tout en maintenant le degré de vide à 11 kPa ou moins ; et/ou (ii) dans lequel au cours du moulage le préimprégné est maintenu à une température située entre 60 et 160 °C, puis après qu'un degré de durcissement de la résine thermodurcissable a atteint 20 % ou plus, et/ou que le changement d'épaisseur du préimprégné est supérieur ou égal à 9 %, un procédé de durcissement par étapes est réalisé jusqu'à la température de durcissement finale.

12. Procédé de fabrication d'un matériau composite renforcé par des fibres, selon la revendication 10 ou 11, dans lequel au cours du moulage après que le degré de durcissement de la résine thermodurcissable a atteint 20 % ou plus tout en durcissant le préimprégné, les conditions de dégazage sont relâchées.

13. Procédé de fabrication d'un matériau composite renforcé par des fibres, selon l'une quelconque des revendications 11 à 12, dans lequel au cours du moulage après le changement d'épaisseur avant et après que le durcissement du préimprégné a atteint 9 % ou plus, les conditions de dégazage sont relâchées.

**14.** Préimprégné selon la revendication 1, dans lequel : (i) la première couche se situe au niveau ou à proximité d'une surface du préimprégné jusqu'à une profondeur de 20 % à partir de la surface et/ou (ii) la première couche comprend une couche intermédiaire moulée et la deuxième couche comprend une couche de fibre de renfort comprenant la fibre de renfort.

FIG. 1

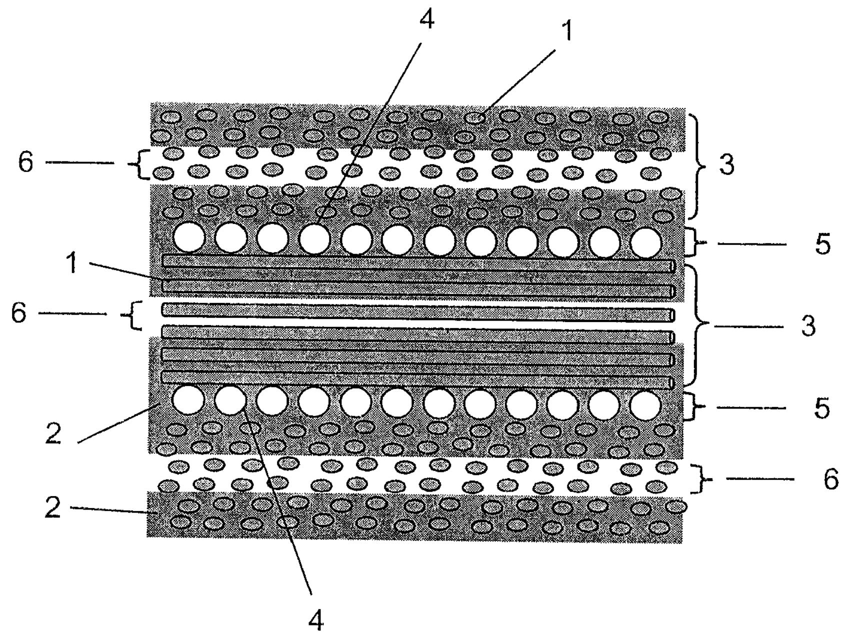


Explanation of reference
1 : Reinforcing fiber
2 : Thermosetting resin
3 : Reinforcing fiber layer(Intralayer)
4 : Thermoplastic resin particle
5 : Interlayer molded layer(Interlayer)
6 : Unimpregnated layer

FIG. 2

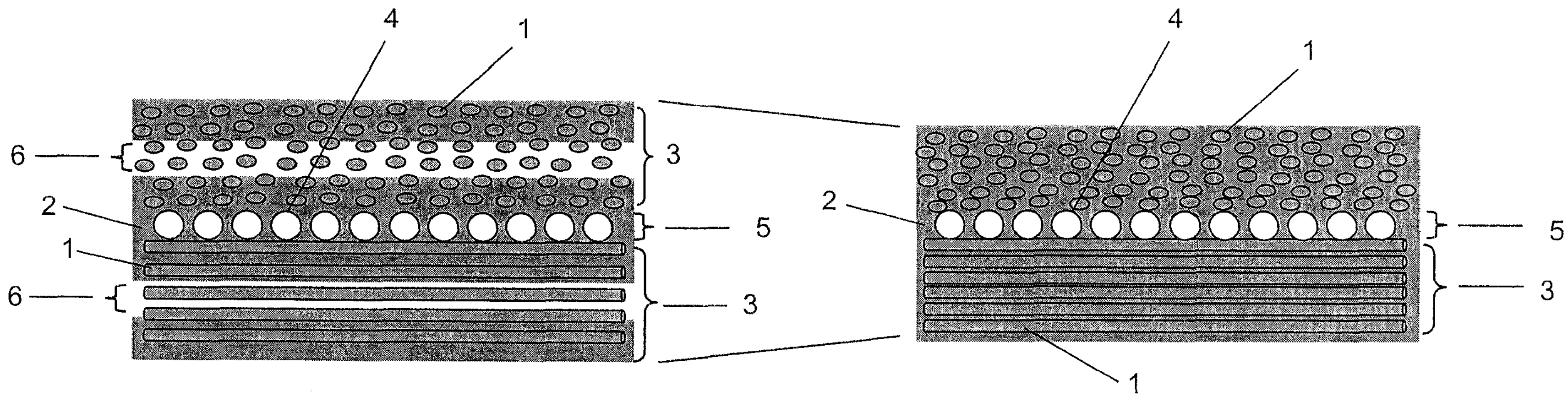


Explanation of reference
1 : Reinforcing fiber
2 : Thermosetting resin
3 : Reinforcing fiber layer(Intralayer)
4 : Thermoplastic resin particle
5 : Interlayer molded layer(Interlayer)
6 : Unimpregnated layer

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61469529 B
- US 61586232 A
- WO 2007041782 A1
- US 20100098927 A1
- US 20100239755 A1
- US 20100247882 A1
- US 20100222461 A1
- US 20070182071 A
- US 4590122 A
- JP 2004050574 A
- US 6391436 B
- JP 10231372 A
- JP 2069566 A
- JP 4292634 A
- WO 94016003 A
- JP 2032843 A
- JP 14249605 A